# EUROPEAN PATENT SPECIFICATION

(11) **EP 0 321 450 B1**
(45) Date of publication and mention of the grant of the patent: **07.07.1993**
(21) Application number: 89101621.4
(22) Date of filing: 21.12.1982
(51) Int. Cl.: G03G 15/20, G01K 7/24, G05D 23/24

(54) **Electrostatic copying apparatus**
Elektrostatisches Kopiergerät
Appareil à copier électrostatique

(30) Priority: 21.12.1981 JP 207562/81; 28.12.1981 JP 212707/81; 28.12.1981 JP 198684/81 U; 29.12.1981 JP 210298/81; 29.12.1981 JP 210299/81; 13.01.1982 JP 4216/82; 18.01.1982 JP 6657/82; 19.01.1982 JP 7090/82
(43) Date of publication of application: 21.06.1989
(62) Divisional of application: 86102749.8
(73) Proprietor: MITA INDUSTRIAL CO. LTD., Osaka 540 (JP)
(72) Inventor: Shigemura, Yutaka, Takarazuka-shi Hyogo-ken (JP); Kimura, Hiroshi, Osaka-fu (JP); Hisajima, Masahiko, Nara-ken (JP); Yada, Isao, Tustin CA. 92680 (US); Satonaka, Shinobu, Toyonaka-shi Osaka-fu (US); Kaminaga, Seiji, Hirakatsu-shi Osaka-fu (JP)
(74) Representative: Beetz & Partner Patentanwälte

(56) References cited:
- DE-A- 2 813 470
- DE-A- 2 923 169
- US-A- 4 144 835
- US-A- 4 145 599
- US-A- 4 216 675
- PATENT ABSTRACTS OF JAPAN, vol. 3, no. 117 (E-141), 29th September 1979, page 142 E 141; & JP-A-54 95 247 (RICOH K.K.) 27-07-1979

## Description

### FIELD OF THE INVENTION

The present invention relates generally to the art of electrostatic copying and particularly to improvements in detecting devices used for temperature and energy control in an electrostatic copying apparatus.

### DESCRIPTION OF THE PRIOR ART

A conventional electrostatic copying apparatus shows several inconveniences which mainly relate to the mode of temperature control employed and to the mode of distributing electric power to the several devices constituting the electrostatic copying apparatus, and it is an object of the present invention to overcome the said inconveniences.

From DE 28 13 470 A1 a display device is known which includes a plurality of display elements which are controlled through digital signals obtained from a voltage comparator circuit and varying in correspondence to an input signal thereto. The said circuit comprises a comparator having a first reference voltage applied to a first input, a second reference voltage applied to a second input and the input signal applied to at least one input terminal, a control circuit for varying the first and second reference voltages in accordance with a clock signal to several preset voltages in their number corresponding to the number of display elements, a plurality of gate means disposed between the output of the comparator circuit and the display elements and means for selectively close or open the gate means in synchronism to the clock signal for excitating the display elements associated to open gate means in accordance with the voltage preset at the comparator circuit. The known display device is destined for displaying the cooling water temperature of a vehicle and is provided with a series connection of five resistors which allow the display of four temperature values.

Further, DE 29 23 169 discloses a recording device which includes operation means comprising a temperature sensor and a comparator circuit for comparing the output voltage of the temperature sensor with a preset reference voltage so as to determine a first temperature for starting the recording and a second temperature controlling the operation of a heating means.

### SUMMARY OF THE IVNENTION

The aforementioned object according to the present invention is obtained by means of a detecting device as defined in the appended claim 1; further developments of the present invention are indicated in the subclaims.

### BRIEF DESCRIPTION OF THE DRAWINGS

In further explaining the features and advantages of the present invention refrence is made to the appended drawings in which
Fig. 1 is a perspective view of an electrostatic copying apparatus equipped with a detecting device according to the invention,
Fig. 2 is perspective view of the copying apparatus of Fig. 1 with some parts in a different stage of operation,
Fig. 3 is a simplified sectional view of the copying apparatus shown in Fig. 1,
Fig. 4 is a simplified partial view showing a panel of the copying apparatus of Fig. 1,
Fig. 5 is a simplified block diagram showing processing means and various detecting meand for feeding signals thereto,
Fig. 6 is a schematic view showing a control system for controlling a charging corona discharge device and an electric heating means in the copying apparatus shown in Fig. 1;
Fig. 7 is a schematic view showing a control system for controlling an electrical heating means of a heat fixing device in the copying apparatus shown in Fig. 1;
Fig. 8 is a flow chart showing the mode of controlling heating of a heat fixing device in the copying apparatus shown in Fig. 1;
Fig. 9 is a diagram showing changes with time of the temperature of the heat fixing device in the copying apparatus shown in Fig. 1;
Fig. 10 is a flow chart showing the mode of controlling electric power in the copying apparatus shown in Fig. 1;
Fig. 11 is a diagram showing the waveform of a current supplied to an electrical heating means of a heat fixing device in the copying apparatus shown in Fig. 1;
Fig. 12 is a diagram showing a modified example of the waveform of a current supplied to an electrical heating means of a heat fixing device;
Fig. 13 is a circuit diagram showing a detecting device for a heat fixing device in the copying apparatus shown in Fig. 1;
Fig. 14 is a diagram showing signals delivered from a switching control means in the detecting device shown in Fig. 13;
Fig. 15 is a circuit diagram showing a modified example of the detecting device shown in Fig. 13; and
Fig. 16 is a diagram showing signals delivered from a switching control means in the modified example of the detecting device of Fig. 15.

### DETAILED DESCRIPTION OF THE PREFERRED EMBODIMENTS

The invention will be described in detail with reference to the accompanying drawings.

### General Outline of Copying Apparatus

The outline of the construction of one embodiment of an electrostatic copying apparatus improved variously in accordance with this invention will be described.

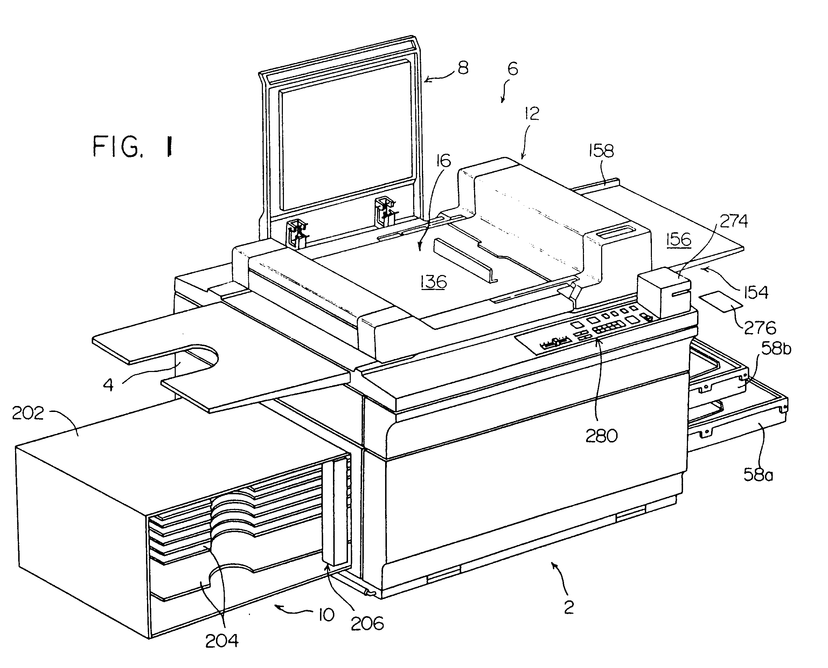

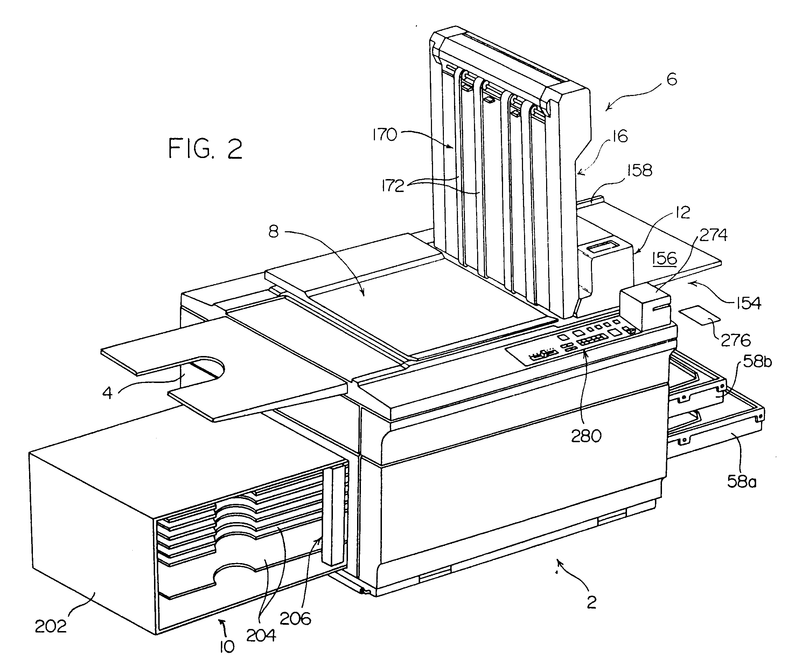

With reference to Figures 1 and 2, the illustrated electrostatic copying apparatus has a main body shown generally at 2 which includes a nearly rectangularlyshaped housing 4. The copying apparatus further includes a semi-automatic document supplying and discharging device shown generally at 6 and annexed to the upper surface of the housing 4, a document holding mechanism shown generally at 8 and annexed similarly to the upper surface of the housing 4, and a sorter shown generally at 10 and annexed to one side surface of the housing 4.

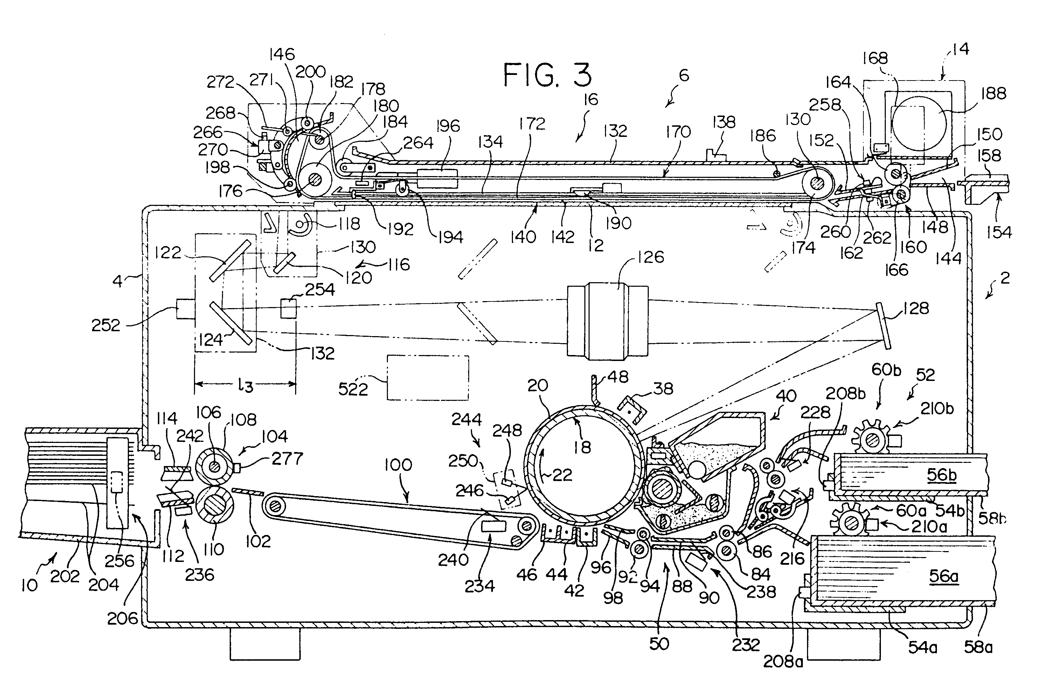

The semi-automatic document supplying and discharging device 6 is substantially the same as the semi-automatic document supplying and discharging device disclosed in Japanese Laid-Open Patent Publication No. 161874/1982 (corresponding to U.S. Patent Application Serial No. 361.236 and European Patent Application No. 82102455.1) and includes a stationary support frame structure 14 mounted on the top of the housing 4 adjacent to one side edge of a transparent plate 12 (Figure 3) disposed on the top of the housing 4, and a movable main frame structure 16 mounted for free turning about an axis extending along said one side edge of the transparent plate 12 and between an operating position (the position shown in Figure 1) at which it covers the transparent plate 12 and a non-operating position (the position shown in Figure 2 which is displaced about 90° from the above operating position in a clockwise direction as viewed from the right bottom in Figures 1 and 2) at which it brings the transparent plate 12 to view. On the other hand, the document holding device 8 is mounted such that it is free to turn between an operating position at which it covers the transparent plate 12 (the position shown in Figure 2) and a non-operating position (the position shown in Figure 1 displaced about 90° from the above operating position as viewed from the right top in Figures 1 and 2) at which it brings the transparent plate 12 to view, and about an axis extending along the other side edge of the transparent plate 12 which extends substantially at right angles to the pivot axis of the main frame structure 16 of the semi-automatic document supplying and discharging device 6. In positioning a document to be copied on the transparent plate 12 by utilizing the semi-automatic document supplying and discharging device 6 in the above-illustrated electrostatic copying apparatus, the document holding device 8 is brought to the non-operating position and the main frame structure 16 of the semi-automatic document supplying and discharging device 6 is brought to the operating position. When the document to be copied is to be positioned on the transparent plate 12 by a manual operation without utilizing the semi-automatic device 6 (for example, when the document is a thick one such as a book or one having relatively high rigidity, such as a thick sheet of paper or a metal plate), the operator brings the main frame structure 16 of the semi-automatic device 6 to the non-operating position, then places the document on the desired site of the transparent plate 12, turns the document holding device 8 to the above operating position, and thus covers the transparent plate 12 and the document thereon with the document holding device 8. In withdrawing the document after the end of a copying cycle, the document holding device 8 is turned to the non-operating position.

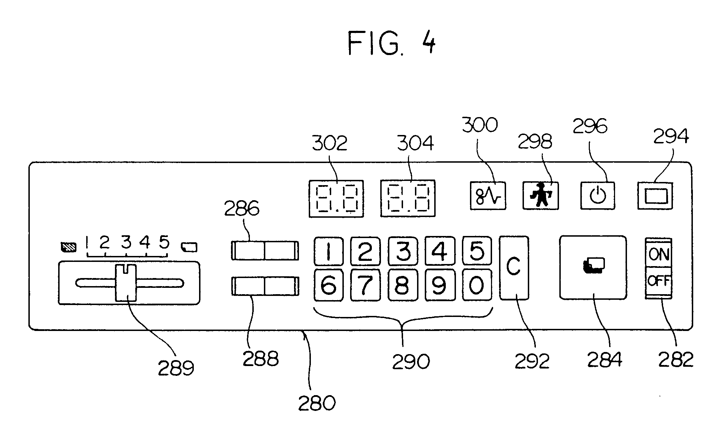

With reference to Figure 3, the main body 2 of the copying apparatus will be described. The transparent plate 12on which to place a document to be copied is disposed on the upper surface of the housing 4. A cylindrical rotating drum 18 is rotatably mounted substantially centrally at the lower part of the housing 4, and an endless photosensitive member 20 is provided on the peripheral surface of the rotating drum 18. It is also possible to use an endless belt element known to those skilled in the art in place of the rotating drum 18 and to dispose the photosensitive member on the surface of the endless belt element. With reference to Figure 4 together with Figure 3, around the rotating drum to be rotated in the direction of an arrow 22 are located a charging zone 24, an exposure zone 26, a developing zone 28, a transfer zone 30, a peeling zone 32 and a cleaning zone 34 in this sequence as viewed in the rotating direction of the rotating drum 18. The charging zone 24 and the exposure zone 26, taken together, form a latent electrostatic image-forming zone 36. A charging corona discharge device 38 is disposed in the charging zone 24, and a developing means 40 of the magnetic brush type in any desired form is disposed in the developing zone 28. A transfer corona discharge device 42 is disposed in the transfer zone 30, and peeling corona discharge devices 44 and 46 are disposed in the peeling zone 32. In the cleaning zone 34, a cleaning blade 48 is provided.

A paper conveying means shown generally at 50 is provided in the lower portion of the housing 4. A paper feed device 52 is disposed at the upstream end portion (the right end portion in Figure 3) of the paper conveying means 50. The paper feed device 52 includes a first cassette-receiving section 54a and a second cassette-receiving section 54b located above it. The first cassette-receiving section 54a receives a paper cassette 58a containing a plurality of stacked copying paper sheets 56a, and the second cassette-receiving section 54b receives a paper cassette 58b containing a plurality of stacked copying paper sheets 56b. A first paper supply means 60a and a second paper supply means 60b are provided respectively in the first cassette-receiving section 54a and the second cassette-receiving section 54b. The first paper supply means 60a is comprised of a support shaft 62a and a supply roller 64a fixed thereto, and the second paper supply means 60b is comprised of a support shaft 62b and a supply roller 64b fixed thereto. To the first cassette-receiving section 54a is annexed a first paper introducing passage 70a defined by a pair of guide plates 66 and 68. Likewise, a second paper introducing passage 70b defined by a pair of guide plates 72 and 74 and a pair of guide plates 76 and 78 is annexed to the second cassette-receiving section 54b. A pair of supply assisting rollers 80 and 82 are provided between the pair of guide plates 72 and 74 and the pair of guide plates 76 and 78. Further, with reference to Figure 3, a pair of conveyor rollers 84 and 86 are provided at a point of junction of the first paper introducing passage 70a and the second paper introducing passage 70b, and following this pair of conveyor rollers 84 and 86, a pair of guide plates 88 and 90, a pair of conveyor rollers 92 and 94 and a pair of guide plates 96 and 98 are provided. The downstream end of the pair of guide plates 96 and 98 extend to the upstream end of the transfer zone 30. A conveyor belt mechanism 100 is disposed downstream of the peeling zone 32 as viewed in the paper conveying direction. A guide plate 102 is disposed downstream of the conveyor belt mechanism 100, and a heat-fixing device 104 is disposed downstream of the guide plate 102. The heat-fixing device 104 is comprised of a heating roller 108 having an electrical heating means 106 therein, and a press-contact roller 110 cooperating with the heating roller 108. A pair of guide plates 112 and 114 are disposed downstream of the heat-fixing device 104. In the paper conveying means 50 of the aforesaid construction, a copying paper is supplied through the first paper introducing passage 70a from the paper cassette 58a in the paper feed device 52 or through the second paper introducing passage 70b from the paper cassette 58b (the paper feed device 52 will be described in more detail hereinafter), and conveyed to the transfer zone 30 by the pair of conveyor rollers, 84 and 86, the pair of guide plates 88 and 90, the pair of conveyor rollers 92 and 94, and the pair of guide plates 96 and 98. The paper is brought into contact with the photosensitive member 20 on the rotating drum 18 in the transfer zone 30, then peeled from the photosensitive member 20 in the peeling zone 32, thereafter conveyed by the conveyor belt mechanism 100, introduced into the heat-fixing device 104 via the guide plate 102, and thereafter passed through the pair of guide plates 112 and 114 and discharged into the sorter 10.

In the upper portion of the housing 4, there is provided an optical unit generally shown at 116 for scanning and exposing a document on the transparent plate 8 and projecting its image onto the photosensitive member 20 on the rotating drum 18 in the exposure zone 26. The optical unit 116 has a document illuminating lamp 118 for illuminating the document placed on the transparent plate 8, a first reflecting mirror 120 for projecting the reflected light from the document onto the photosensitive member 20, a second reflecting mirror 122, a third reflecting mirror 124, a lens assembly 126 and a fourth reflecting mirror 128. During scanning and exposure, the document illuminating lamp 118 and the first reflecting mirror 120 which are mounted on a common support frame 130 are moved substantially horizontally at a predetermined speed V from their initial position shown by the solid line to required positions (for example, maximum scanning-exposure termination positions shown by the two-dot chain line), and the second reflecting mirror 122 and the third reflecting mirror 124 which are mounted on a coupon support frame 132 are moved at a speed one half of the aforesaid speed (i.e., ½V) from their initial positions shown by the solid line to required positions (for example, maximum scanning-exposure termination positions shown by the two-dot chain line). At this time, the light reflected from the document illuminated by the document illuminating lamp 118 is reflected successively by the first reflecting mirror 120, the second reflecting mirror 122 and the third reflecting mirror 124 and reaches the lens assembly 126. Thereafter, it is reflected by the fourth reflecting mirror 126 and reaches the photosensitive member 20 in the exposure zone 26. When the scanning exposure is terminated, the document illuminating lamp 118, the first reflecting mirror 120, the second reflecting mirror 122 and the third reflecting mirror 124 are returned to their initial positions shown by the solid line.

In the main body 2 of the copying apparatus described above, while the rotating drum is rotated in the direction of arrow 22, the charging corona discharge device 38 substantially uniformly charges the photosensitive member 20 to a specified polarity in the charging zone 24, and thereafter in the exposure zone 26, the optical unit 116 projects the image of the document to eliminate the charge on the photosensitive member 20 selectively, whereby a latent electrostatic image corresponding to the document is formed on the photosensitive member 20. Thereafter, the developing means 40 applies a toner to the latent electrostatic image on the photosensitive member 20 to develop the latent electrostatic image to a toner image. Then, in the transfer zone 30, a copying paper conveyed by the paper conveying means 50 is brought into contact with the photosensitive member 20, and by the action of the transfer corona discharge device 42, the toner image on the photosensitive member 20 is transferred to the paper. Subsequently, in the peeling zone 32, the copying paper is peeled from the photosensitive member 20 by the action of the peeling corona discharge devices 44 and 46. The copying paper having the toner image transferred thereto is then conveyed to the heat-fixing device 104 where the toner image is fixed to the copying paper. The paper is then discharged into the sorter 10. In the meantime, the photosensitive member 20 continues to rotate, and the toner remaining on the photosensitive member 20 after the transfer operation is removed from it by the action of the cleaning blade 48 in the cleaning zone 34 or by the action of the magnetic brush-type developing means 40 in the developing zone 28.

The sorter 10 has a frame structure 202 paving an open front side. The inside of the frame structure 202 includes a plurality of vertically stacked bins 204 and a moving means 206 for suitably moving the bins 204. When the copying process is to be repeated a number of times for the same document, after a copy (i.e., a copying paper having a fixed toner image) formed in a given copying cycle is received in the lowermost bin 204, the moving means 206 immediately moves downwardly that bin 204 which exists immediately above the aforesaid bin so as to receive a copy to be formed in the next copying cycle. After a copy in the final cycle of the copying process is received in a specified bin 204, the moving means 206 raises those bins 204 excepting the lowermost bin 204 to return them to the initial positions shown in Figure 3.

### Detecting means, manually operable switches, display means, etc.

In the paper feed device 52 in the main body 2 of the electrostatic copying apparatus, either one of three types of paper cassettes containing copying paper sheets according to JIS standards A3, A4 and A5 is mounted on the first cassette-receiving section 54a, and either one of three types of paper cassettes containing paper sheets according to JIS standards B4, B5 and B6 is mounted on the second cassette-receiving section 54b. In the first cassette-receiving section 54a and the second cassette-receiving section 54b, discriminating means 208a and 208b are respectively provided for determining which of the three types of the paper cassettes has been mounted. Each of the discriminating means 208a and 208b may be comprised of two reed switches disposed in spaced-apart relationship in the widthwise direction. In this case, two permanent magnets (not shown) are fixed to the opposite sides of the front surface of each of the A3 paper cassette containing paper sheets having a size A3 and the B4 paper cassette containing paper sheets having a size B4, for example; one permanent magnet is fixed to one side of the front surface of each of the A4 paper cassette containing paper sheets having a size A4 and the B5 paper cassette containing paper sheets having a size B5; and one permanent magnet is fixed to one side of the front surface of each of the A5 paper cassette containing paper sheets having a size A5 and the B6 paper cassette containing paper sheets having a size B6 which side is opposite to said one side of the front surface of the A4 or B5 paper cassette. Accordingly, when the A3 paper cassette is to be loaded on the first cassette-receiving section 54a, both of the two reed switches constituting the discriminating means 208a are closed. When the A4 paper cassette is to be loaded therein, one of the two reed switches is closed. Furthermore, when the A5 paper cassette is to be loaded, the other of the two reed switches is closed. Likewise, when the B4 paper cassette is to be loaded in the second cassette-receiving section 54b, both of the two reed switches constituting the discriminating means 208b are closed. When the B5 paper cassette is to be loaded, one of the two reed switches is closed. Furthermore, when the B6 paper cassette is to be loaded, the other of the two reed switches is closed.

Detecting means 210a and 210b for detecting the rotation or stopping of the shafts 62a and 62b are provided with respect to each of the shaft 62a fixed to the supply roller 64a and the shaft 62b fixed to the supply roller 64b in the paper feed device 52. The detecting means 210a and 210b are comprised respectively of discs 212a and 212b fixed to one end portions of the shafts 62a and 62b and stationary photocouplers 214a and 214b consisting of light emitting elements located on one side of the discs 212a and 212b and light-receiving elements located on the other sides of the discs 212a and 212b. A number of cuts are formed at suitable intervals in the circumferential direction in the circumferential edge portion of each of the discs 212a and 212b. When each of the shafts 62a and 62b is at rest, a cut or a portion between cuts of each of the discs 212a and 212b exists continuously between the light-emitting element and the light-receiving element of each of the photocouplers 214a and 214b, and therefore the light-receiving element of each of the photo couplers 214a and 214b is continuously maintained in condition for receiving light from the light-emitting element or for not receiving it, On the other hand, when each of the shafts 62a and 62b is rotated, a cut and a portion between cuts of each of the discs 212a and 212b alternately pass between the light-emitting element and the light receiving element of each of the photocouplers 214a and 214b, and therefore, the light receiving element of each of the photocouplers 214a and 214b is alternately maintained in condition for not receiving light from the light emitting element and for receiving it.

Again with reference to Figure 3, the main body 2 of the electrostatic copying apparatus further includes paper detecting means 232, 234 and 236 which detect a copying paper conveyed by the paper conveying means 50, at a position slightly downstream of the pair of conveyor rollers 84 and 86, at a position slightly downstream of the peeling zone and at a position slightly downstream of the heat-fixing device 104 (the downstream end portion of the paper conveying passage in the main body 2). The detecting means 232, 234 and 236 respectively have actuating arms 238, 240 and 242 projecting into the paper conveying passage, and are closed when the leading edge of the copying paper acts on the actuating arms 238, 240 and 242 respectively and are opened when the trailing edge of the copying paper goes past the actuating arms 238, 240 and 242.

With reference to Figure 3, there is provided a paper wrapping detecting means 244 which when a copying paper kept in contact with the photosensitive member 20 on the rotating drum 18 in the transfer zone 30 wraps about the photosensitive member 20 without being peeled from the photosensitive member 20 in the peeling zone, detects the wrapping paper. The detecting means 244 is comprised of a light emitting element 246 for irradiating light onto the photosensitive member 20 at a position slightly downstream of the peeling zone as viewed in the rotating direction of the rotating drum 18, a light receiving element for receiving the light reflected from the photosensitive member 20, and a signal generator 250 electrically connected to the light receiving element 248 for producing a paper wrapping signal when the intensity of light received by the light receiving element is below a predetermined threshold value. The photosensitive member 20 itself has a high reflectance, and therefore when the paper is not wrapped about the photosensitive member 20, the light receiving element 248 receives light having a sufficient intensity. However, when the paper wraps about the photosensitive member, the light receiving element 248 receives light having an intensity below the threshold value and the signal generator 250 produces a paper wrapping signal, because the copying paper has a relatively low reflectance. Preferably, the distance ℓ₂ from the peeling zone 32 to the detecting position of the detecting means 244 as viewed in the rotating direction of the rotating drum 18 is substantially equal to the distance ℓ₁ from the peeling zone 32 to the detecting position of the detecting means as viewed in the moving direction of the copying paper.

With reference to Figure 3, the main body 2 of the electrostatic copying apparatus further has disposed therein detecting means 252 and 254 for detecting the support frame 132 on which the second reflecting mirror 122 and the third reflecting mirror 124 in the optical unit 116 are mounted. Each of the detecting means 252 and 254 may be constructed of a reed switch to be actuated by a permanent magnet fixed to the support frame 132. The detecting means 252 detects the support frame 132 when the support frame 132 is at its initial position shown by the solid line. The detecting means 254 detects the support frame 132 and is closed, when the support frame 132 moves from its initial position to a position displaced to the right by a predetermined distance ℓ₃.

A detecting means 256 which may be of any known form is disposed in the sorter 10, which when a trouble occurs (for example, when the bins 204 are not moved as required), detects it and produces a signal.

In the semi-automatic document supplying and discharging device 6, there is provided a document insertion detecting means 258 which detects a document at that position of the introducing portion 144 of the conveying passage 140 which is slightly upstream of the document advancing arresting position of the first regulating member 162. The detecting means 258 may be comprised of a light emitting element 260 located above the introducing portion 144 and a light receiving element 262 located below the introducing portion 144. When a document is inserted by hand into the introducing portion 144, light projected onto the light receiving element 262 from the light emitting element 260 is shut off by the document, whereupon the detecting means 258 produces a document insertion signal. There is also provided a detecting means 264 which detects a document at that position of the main portion 142 of the conveying passage 140 which is slightly upstream of the document advancing arresting position of the second regulating member 192. The detecting means 264 may be constructed of a light emitting element for projecting light onto the transparent plate 12, a light receiving element for receiving light reflected from the transparent plate 12, and a signal generator which produces a document detection signal when the intensity of the light received by the light receiving element falls below a predetermined threshold value. Since the transparent plate 12 itself has a high reflectance, the light receiving element receives light of a sufficient intensity when no document exists at the detecting position. On the other hand, because the reflectance of the document is relatively low, when the leading edge of the document arrives at the detecting position, the light receiving element receives light having an intensity below the predetermined threshold value, and the signal generator produces a document detection signal. When the trailing edge of the document goes past the detecting position, the light receiving element again receives light having a sufficient intensity and the above document detection signal disappears. Furthermore, a detecting means 266 is provided which detects the document at the downstream end portion of the curved discharging portion 146 of the conveying passage 140. The detecting means 266 is comprised of a microswitch 270 having an actuating arm 268, and a detecting piece 272 mounted pivotally by a supporting pin 271. One end portion of the detecting piece 272 projects into the curved discharging portion 146. When the leading edge of the document acts on one end portion of the detecting piece 272, the detecting piece 272 is caused to pivot counterclockwise from its normal position shown in the drawing. As a result, the other end portion of the detecting piece 272 acts on the actuating arm 268 of the microswitch 270 to close the microswitch 270. When the trailing edge of the document goes past the one end portion of the detecting piece 272, the detecting piece 272 returns to its normal position shown in the drawings, and the microswitch 270 is opened.

In the illustrated copying apparatus, there are further provided known suitable detecting means (inclusively designated by numeral 275) which detect a disorder in various other constituent elements such as the document illuminating lamp 118 (Figure 3), the electrical heating means 106 (Figure 3) in the heat-fixing means, and the electrical heating means 273 (Figure 4) for heating the photosensitive member 20. The electrical heating means 273 (Figure 4) for heating the photosensitive member 20 will be described further hereinafter. In the illustrated copying apparatus, a temperature detecting means 277 (Figure 3) for detecting the temperature of the heat-fixing device 104 and a temperature detecting means 279 (Figure 4) for detecting the temperature of the surface or its vicinity of the photosensitive member 20 are further provided. Detecting devices 281 and 283 respectively including the temperature detecting means 277 and 279 produce not only a temperature signal but also a signal showing a disorder which occurs in the temperature detecting means 277 and 279, as will be described in detail hereinbelow.

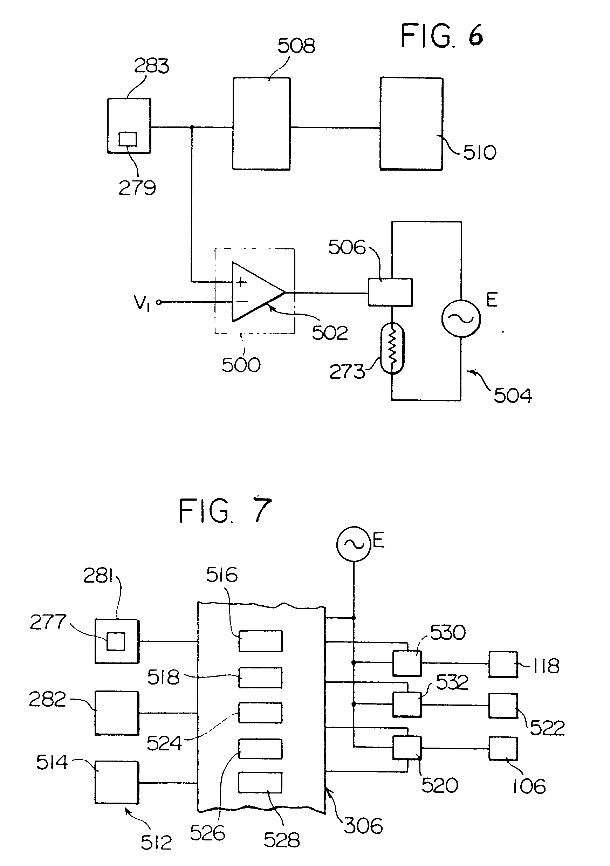

With reference to Figures 1 and 2, a key card inserting section 274 is provided at the front end portion of the upper surface of the housing 4 of the main body 2 of the copying apparatus. A given key card 276 is inserted into the key card inserting section by an operator. In the key card inserting section 274 is provided a signal producing means 278 which when the key card 276 is inserted, detects it and produces a copying process performance permission signal (Figure 7). In the illustrated electrostatic copying machine, the copying process cannot be performed unless the operator inserts the key card 276 into the key card inserting section 274 thereby producing the aforesaid signal for the permission of the performance of the copying process.

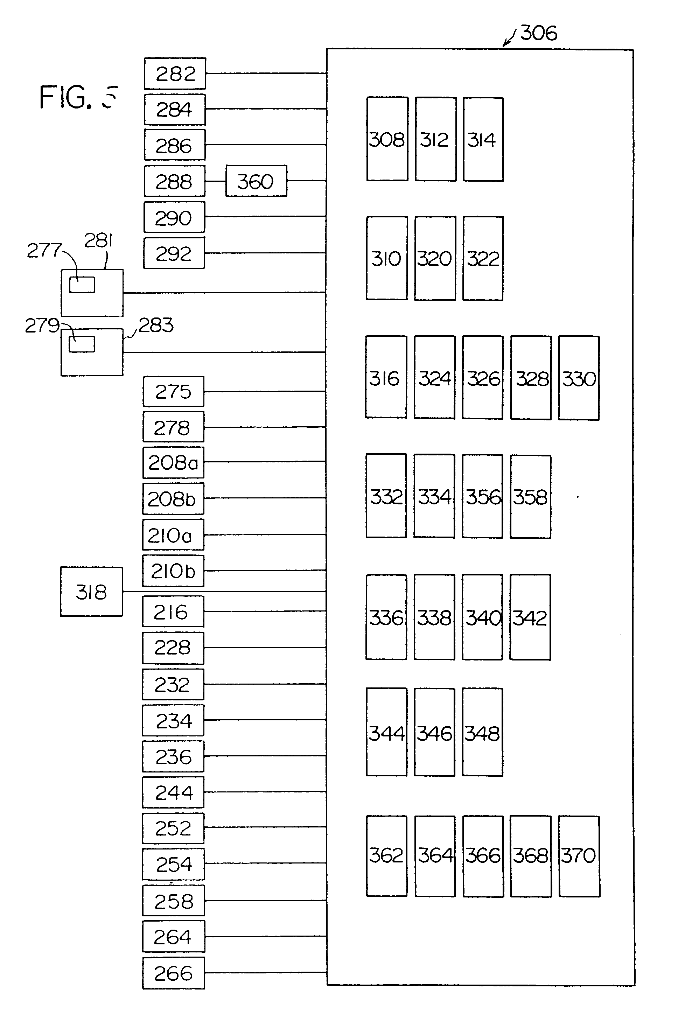

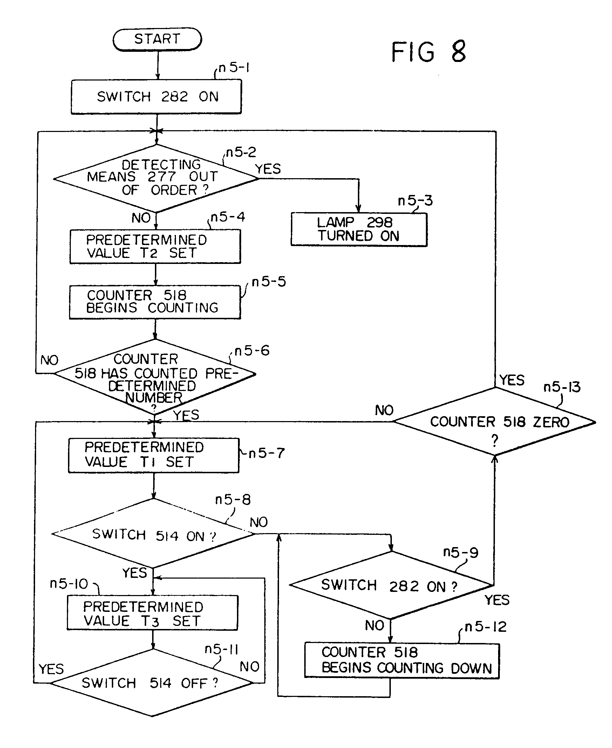

This prevents any unauthorized person from operating the copying apparatus and obtaining copies. Adjacent to the key card inserting section 274, a panel 280 is disposed at the front end portion of the upper surface of the housing 4. Referring to Figure 6, the panel 280 has arranged thereon a power switch 282, a print switch 284, a paper selection switch 286 and an interruption switch 288. When the power switch 282 is closed by a manual operation, the copying apparatus is connected to a suitable power supply such as a commercial alternate-current power supply, and when the power switch 282 is opened, the copying apparatus is cut off from the power supply. When the print switch 284 is instantaneously closed by a manual operation, a signal for starting the copying process is produced. The paper selection switch 286 is maintained in one of two conditions. When it is maintained in one condition, the supply roller 64a in the paper feed device 52 is set in an operable condition (therefore, a copying paper is ready for supplying from the paper cassette 58a loaded in the first cassette-receiving section 54a). When it is maintained in the other condition, the supply roller 64b in the paper feed device 52 is set in an operable condition (therefore, a copying paper is ready for supplying from the paper cassette 58b loaded in the second cassette receiving section 54b) (Figures 3 and 5). The interruption switch 288 is manually closed when so-called "interrupting copying" is to be performed, as will be described hereinafter An operating knob 289 for controlling the amount of light exposure on the photosensitive member 20 is also disposed on the panel 280. The panel 280 further includes ten input keys from 0 to 9 for inputting the number of copies to be produced from each document and a clear key 292 for cleaning the input numeral set by these input keys 290. The panel 280 further has a key card lamp 294 for showing that the key card 276 has not been inserted into the key card inserting section 274 and the copying process performance permission signal has not yet been produced; a waiting display lamp 296 for showing that the heat-fixing device 104 has not yet attained the required temperature; a service man call lamp 298 showing that a disorder has occurred in a constituent element in the copying apparatus and a service man is required for inspection and repair; and a trouble lamp 300 which shows that a trouble has occurred in the conveying of a copying paper in the main body 2 of the copying apparatus, a trouble has occurred in the conveying of a document in the semi-automatic document supplying and discharging device, or a trouble has occurred in the sorter 10. A first display means 302 and a second display means 304 are also arranged on the panel 280. Each of the first display means302 and the second display means 304 has two light emitting segments having the shape of the arabic figure 8. The mode of display by the first and second display means 302 and 304 will be described in more detail hereinafter.

### Basic operating procedure of the copying apparatus

The operations of the copying apparatus as described hereinabove is controlled by a processing means 306 including microprocessors constituting various control and discrimating means.

When the power switch is manually closed, power is applied to the copying apparatus, whereby a waiting flag 308 included in the processing means 306 is set at logic "1" and the electrical heating means 106 of the heat fixing device 104 and the electrical heating means 273 for heating the photosensitive member 20 are energized (the controlling of the energization and deenergization of the heating means 106 and the heating mess 273 will be described in more detail hereinafter). When the waiting flag 308 is set at logic "1", the waiting display lamp 296 is energized to indicate that the copying apparatus is in a preparatory condition, and the copying apparatus is prevented from performing the copying process described below. When the temperature of the heat fixing device 104 detected by the temperature detecting means 277 exceeds a predetermined value as a result of heating by the heating means 106, the waiting flag 308 is reset at logic "0", and the waiting display lamp is deenergized.

The operator manipulates ten input keys 290 to input the number of copies to be produced from the same document. As a result, a copy number setting counter 310 included in the processing means 306 is set at a predetermined number, whereby a continuity flag 312 included in the processing means 306 is set at logic "1". The logic "1" of the continuity flag 312 shows that the copying process should be continuously performed. When the number of copies to be produced from the same document is only one, it is not necessary to operate the input keys 290. In this case, the continuity flag 312 is set at logic "1" when the operator instantaneously closes the print switch 284.

When the semi-automatic document supplying and discharging device 6 is not utilized, a document is placed by hand on the transparent plate 12, and the document holding device 8 is brought to its operating position (the position shown in Figure 2). Then, the operator instantaneously closes the print switch 284 by a manual operation, whereupon a copying process performance signal is produced. If at this time, an inhibition flag 314 included in the processing means 306 is not set at logic "1" (the setting of the inhibiting flag 314 will be described hereinafter) and therefore the copying process can be performed, the rotation of the rotating drum 18 and the operation of the developing means 40 are started in response to the copying process performance signal, and a copying paper is delivered from one of the paper cassettes 58a and 58b in the paper feed device 52 (from which of the cassette 58a or 58b the paper is delivered depends upon the condition of the paper selection switch 286 described hereinabove). When the paper 56a is delivered from the paper cassette 58a, the supply roller 64a is rotated. When the leading edge of the copying paper 56a delivered by the supply roller 64a abuts against the nip position of the pair of stationary conveyor rollers 84 and 86 and the copying paper 56a is bent as shown by the two-dot chain line in Figure 5, the detecting means 216 is closed to thereby stop the rotation of the supply roller 64a. When the copying paper 56b is delivered from the paper cassette 58b, the pair of supply assisting rollers 80 and 82 are rotated together with the supply roller 64b. When the leading edge of the copying paper 56b delivered by the supply roller 64b is detected by the detecting means 228, a first counter 316 for paper conveyance included in the processing means 306 starts to count clock pulses supplied from a clock pulse supply source 318. When the counter 316 has counted a predetermined number, the rotation of the supply roller 64b is stopped, and the delivered copying paper 56b is fed by the pair of supply assisting rollers 80 and 82. The aforesaid predetermined number counted by the counter 316 is set at a value corresponding to the time sufficient for the leading edge of the copying paper 56b to reach the nip position of the pair of supply assisting rollers 80 and 82. When the leading edge of the copying paper 56b fed by the pair of supply assisting rollers 80 and 82 abuts against the nip position of the pair of stationary conveyor rollers 84 and 86 and the copying paper 56b is bent, the detecting means 216 is closed to thereby stop the rotation of the pair of supply assisting rollers 80 and 82.

When the above-described paper supplying action is terminated and the detecting means 216 is closed, the counted numbers of a copying cycle counter 320 and a copying paper counter 322 included in the processing means 306 are increased by one. When the counted number of the copying cycle counter 320 becomes equal to that of the copy number setting counter 310, the continuity flag 312 is reset at logic "0". The paper counter 322 will be described further hereinafter.

At the same time, when the copying process performance signal is produced, the document illuminating lamp 118 is energized, and a timing counter 324 included in the processing means 306 starts to count clock pulses supplied from the clock pulse supply source 318. When the counter 324 has counted a first predetermined number, the supporting frames 130 and 132 of the optical unit 116 begin to move to the right in Figure 3 from their initial positions shown by the solid line in Figure 3. Thereafter, when the counter 324 has counted a second predetermined number, the charging corona discharge device 38 is energized. Thus, a latent electrostatic image is formed on the photosensitive member 20, and then developed into a toner image.

When the support frame 132 of the optical unit 116 has moved a predetermined distance ℓ₃, the detecting means 254 detects it. As a result, the pair of conveyor rollers 84 and 86 (and the pair of supply assisting rollers 80 and 82) are rotated, and at the same time, the pair of conveyor rollers 92 and 94, the conveying belt mechanism 100 and the rollers 108 and 110 of the heat-fixing device 104 are rotated. Thus, the conveying of the copying paper having its leading edge located at the nip position of the pair of conveyor rollers 84 and 86 is started.

When the detecting means 232 has detected the leading edge of the copying paper, a first counter 326 for transfer included in the processing means begins to count clock pulses supplied from the clock pulse supply source 318. When the counter 362 has counted a predetermined number, the transfer corona discharge device 42 is energized. Thus, the toner image on the photosensitive member 20 is transferred to the copying paper in the transfer zone. Thereafter, in the peeling zone 32, the copying paper is peeled off from the photosensitive member 20 by the action of the peeling corona discharge devices 44 and 46. By the copying process performance signal, the peeling corona discharge devices 44 and 46 begin to be energized as soon as the rotating drum 18 begins to rotate, and are deenergized when the rotation of the rotating drum 18 is stopped after the termination of the copying process.

When the copying paper is further conveyed, and the detecting means 232 detects the passage of the trailing edge of the copying paper past the detecting position of the detecting means 232, the charging corona discharge device 38 and the document illuminating lamp 18 are deenergized, and furthermore, the supporting frames 130 and 132 of the optical unit 116 stop moving to the right in Figure 3 and begin to move to the left in Figure 3. At the same time, a second counter 328 for transfer included in the processing means 306 begins to count clock pulses supplied from the clock pulse supply source 318. When the counter 328 has counted a predetermined number, the transfer corona discharge device 42 is deenergized.

The copying paper is further conveyed by the conveying belt mechanism 100 and the rollers 108 and 110 of the heat fixing device 104, and discharged into the sorter 10. When at this time, the continuity flag 312 is set at logic "1", one bin 204 of the sorter 10 is moved downwardly when a second paper conveyance counter 330, which begins to count clock pulses supplied from the clock pulse supply source 318 when the trailing edge of the copying paper has gone past the deetecting position of the detecting means 236, has counted a predetermined number. Simultaneously, the counted number of the paper counter 322 is decreased by one.

When the support frames 130 and 132 of the optical unit 116 moving to the left in Figure 3 reach their initial positions shown by the solid line in Figure 3, the detecting means 252 detects it. When the continuity flag 312 is reset at logic "0", the support frames 130 and 132 of the optical unit 116 are stopped at the initial positions. On the other hand, when the continuity flag 312 is set at logic "1", the support frames 130 and 132 of the optical unit 116 begin to move to the right in Figure 3 for the next cycle of copying simultaneously with (or as will be described below, after the lapse of a predetermined period of time from) the stopping of their leftward movement in Figure 3. At this time, the paper delivery action for the next copying cycle has already ended, and the leading edge of a copying paper for the next copying cycle stops in abutment against the nip position of the pair of stationary conveyor rollers 84 and 86. How the action of delivering paper for the next copying cycle is started will be described in detail hereinafter.

When the continuity flag 312 is set at logic "1", the rotating drum 18 continues to rotate for the next copying cycle. But when the continuity flag 312 is reset at logic "0", the rotating drum 18 is stopped at a suitable time after it has undergone the cleaning action of the cleaning blade 48 or the cleaning action of the developing means 40 (this feature will be described further hereinafter).

When the semi-automatic document supplying and discharging device 6 is utilized, the main frame structure 16 is brought to its operating position shown in Figures 1 and 3. The operator manually introduces a document into the introducing portion 144 of the conveying passage 140. As a result, the detecting means 258 detects the inserted document to produce a document insertion signal. When the document insertion signal is produced, the print switch 284 is instantaneously closed, and quite the same procedure as in the case of producing the aforesaid copying process performance signal is performed in the main body 2 of the copying apparatus.

On the other hand, in the semi-automatic document supplying and discharging device 6, the motor 188 is energized upon the production of the document insertion signal, thereby rotating the driven roller 164 of the conveying roller unit 160 and the conveying belt mechanism 170. At the same time, the solenoid 168 is energized to press the follower roller 166 of the conveying roller unit 160 against the driven roller 164 and simultaneously cause the first regulating member 162 to move away from the introducing portion 144 thereby permitting advancing of the document. Thus, the inserted document is conveyed to the main portion 142 from the introducing portion 144.

When the detecting means 258 has detected the passage of the trailing edge of the inserted document past the detecting position of the detecting means 258, a first counter 332 for document conveyance included in the processing means 306 begins to count clock pulses supplied from the clock pulse supplying source 318. When the counter 332 has counted a predetermined number, the solenoid 168 is deenergized.

When the detecting means 264 detects the leading edge of the document conveyed by the conveying belt mechanism 170, the motor 188 is deenergized. But the document further advances owing to inertia, and stops when its leading edge makes contact with the second regulating member 192. Thus, the document is positioned as required on the transparent plate 12.

The motor 188 is energized when the detecting means 232 has detected the passage of the trailing edge of the copying paper past the detecting position of the detecting means 232 after the copying process is performed in the main body 2 of the copying paper through a predetermined number of cycles and the continuity flag 312 is reset at logic "0" (namely, when the exposure of the document in the final cycle of the copying process has ended). Simultaneously, the solenoid 196 is energized to cause the second regulating member 192 to move away from the main portion 142, thereby permitting advancing of the document. Thus, the document is discharged by the conveying belt mechanism 170 from the main portion 142 through the curved discharging portion 146.

When the detecting means 266 has detected the passage of the trailing edge of the document past the detecting position of the detecting means 266, a second counter 334 for document conveyance included in the processing means 306 begins to count clock pulses supplied from the clock pulse supply source 318. When the counter 334 has counted a predetermined number, the motor 188 and the solenoid 196 are deenergized.

When the next document has been introduced into the introducing portion 144 by hand before the previous document is discharged from the transparent plate 12, the aforesaid procedure is not immediately performed even when the detecting means 258 has detected the document and produced a document insertion signal. The aforesaid procedure is performed when the previous document has been completely discharged (i.e., after the counter 334 has counted a predetermined number).

### Detection of troubles in the conveying of the copying paper and the document

In the main body 2 of the copying apparatus, conveying troubles such as jamming of the copying paper are detected in the following instances.

(1) When the delivery of a copying paper by the supply roller 64a or 64b is started, a first paper jam counter 336 included in the processing means 306 begins to count clock pulses supplied from the clock pulse supply source 318, but the counter 336 has counted a predetermined number without being reset by the detection of the leading edge of the copying paper by the detecting means 232.

(2) When the detecting means 232 has detected the leading edge of the copying paper, a second paper jam counter 338 included in the processing means 306 begins to count clock pulses supplied from the clock pulse supply source 318, but the counter has counted a predetermined number without being reset by the detection of the leading edge of the copying paper by the detecting means 234.

(3) The detecting means 244 has detected the wrapping of the copying paper about the photosensitive member 20.

(4) The detecting means 244 has detected the wrapping of the copying paper about the photosensitive member 20 and the detecting means 234 has detected the copying paper (this means that two sheets of copying paper are delivered simultaneously, and one of them wraps about the photosensitive member 20).

(5) When the detecting means 234 has detected the leading edge of the copying paper, a third paper jam counter 340 included in the processing means 306 begins to count clock pulses supplied from the clock pulse supply source 318, but the counter 340 has counted a predetermined number without being reset by the detection of the leading edge of the copying paper by the detecting means 236.

(6) When the detecting means 236 has detected the leading edge of the copying paper, a fourth paper jam counter 342 included in the processing means 306 begins to count clock pulses supplied from the clock pulse supply source 318, but the counter 342 has counted a predetermined number without being reset by the detection of the trailing edge of the copying paper by the detecting means 236.

### Control of the positioning of the cleaning blade

As already stated with reference to figure 3, in the main body 2 of the copying apparatus, a cleaning blade 48 made of a suitable flexible material such as synthetic rubber is disposed for removing the residual toner from the photosensitive member 20 in the cleaning zone 34 located around the rotating drum 18. The cleaning blade 48 is supported by a blade supporting mechanism 354 known per se including a solenoid 352. When the solenoid 352 is energized, the cleaning blade 48 is held at its operating position. When it is deenergized, it is held at its non-operating position shown by the two-dot chain line in Figure 4. At the operating position, the cleaning blade 48 is pressed elastically against the photosensitive member 20 on the rotating drum 18. On the other hand, at the non-operating position, the cleaning blade 48 is away from the photosensitive member 20 on the rotating drum 18.

As already stated hereinabove, a magnetic brush type developing means 40 is disposed in the developing zone 28 around the rotating drum 18 in the main body 2 of the copying apparatus. As is well known to those skilled in the art, the magnetic brush-type developing means 40 can be used not only for developing a latent electrostatic image formed on the photosensitive member 20 but also, as a cleaning means, for removing the residual toner from the photosensitive member 20 after the transfer. When the magnetic brush-type developing means 40 is used as a cleaning means, the rotating drum 18 should additionally be kept rotating even after the transfer so that that area of the photosensitive member on which the toner remains after the transfer (i.e., that area where the toner image is formed) passes through the developing zone 28 and thus undergoes the cleaning action of the magnetic brush-type developing means 40; and then the next cycle of the copying process should be started. Hence, the copying time necessarily becomes longer.

It will be easily understood on the other hand that when the residual toner on the photosensitive member 20 is removed by using the cleaning blade 48, it is not necessary to keep the rotating drum 18 rotating additionally, and therefore, the time required for copying can be minimized. In the case of removing the residual toner from the photosensitive member 20 by means of the cleaning blade 48, the photosensitive member and/or the cleaning blade 48 tends to be degraded relatively early because the cleaning blade 48 is pressed against the photosensitive member 20.

In the main body 2 of the copying apparatus, paper cassettes containing copying paper sheets of various sizes are selectively mounted on the first cassette receiving section 54a and the second cassette receiving section 54b of the paper feeding device 52, and copying paper sheets of various sizes are selectively delivered and conveyed through the transfer zone 30. Some of these sizes are longer than the total length of the photosensitive member 20, and the others are equal to, or smaller than, the photosensitive member 20. As will be understood from the foregoing description about the basic operating procedure of the copying apparatus, the length of a toner image formed on the photosensitive member 20 is substantially equal to the length of a copying paper delivered.

In view of the aforesaid fact, in the copying apparatus improved in accordance with this invention, when a copying paper conveyed through the transfer zone 30 is a long one having a length larger than the total length of the photosensitive member 20, the cleaning blade 48 is positioned at the aforesaid operating position and thus performs its cleaning action. When a copying paper conveyed through the transfer zone 30 is a short one having a length equal to, or smaller than, the total length of the photosensitive member 20, the cleaning blade 48 is held at its non-operating position, and the magnetic brush-type developing means 40 performs a cleaning action.

In the copying apparatus improved in accordance with this invention, when the copying paper conveyed through the transfer zone 30 is a short one the cleaning blade 48 is held at its non-operating position and is away from the photosensitive member 20. Hence, the life of the photosensitive member 20 and/or the cleaning blade 48 becomes correspondingly longer. When the copying paper conveyed through the transfer zone 30 is a long one, the cleaning of the residual toner is carried out by utilizing the magnetic brush-type developing means 40. It is necessary therefore to rotate the rotating drum 18 additionally after the transfer, and the copying time becomes correspondingly longer. However, as will be understood from the foregoing description of the basic operating procedure of the copying apparatus, when the copying paper conveyed through the transfer zone 30 is a long one, the basic copying time, i.e., the time other than the time during which the rotating drum 18 is additionally rotated is relatively short. Hence, the prolongation of the copying time owing to the additional rotation of the rotating drum 18 does not give rise to any practical problem.

### Control of continued delivery of the copying paper

With reference to Figure 3, in the copying apparatus described hereinabove, when the next cycle of the copying process is performed successively after the previous copying cycle, it is desired to start delivery of a copying paper for the next copying cycle as early as possible after the paper delivery in the previous copying cycle. On the other hand, the delivery of a copying paper in the next cycle of copying should be started (a) in order to prevent overlapping of the trailing edge portion of the copying paper fed in the previous copying cycle with the leading edge of the copying paper delivered fed in the next cycle of copying in the first paper introducing passage 70a or the second paper introducing passage 70b, after the copying paper delivered in the previous copying cycle and abutting at its leading edge against the nip position of the pair of stationary conveyor rollers 84 and 86 begins to be conveyed by the pair of conveyor rollers 84 and 86 whose rotation has been started, and (b) after the trailing edge of the copying paper delivered in the previous copying cycle has departed from the paper cassette 58a or 58b. As stated hereinabove, various paper cassettes are selectively mounted on the first and second cassette receiving sections 54a and 54b, and the length of a copying paper to be delivered is various. When a copying paper of a relatively large length is delivered, the trailing edge of the copying paper departs from the paper cassette only after the lapse of a relatively long period of time from the starting of conveying of the delivered paper by the pair of conveyor rollers 84 and 86. When a relatively short copying paper is delivered, the trailing edge of the copying paper departs from the paper cassette after the lapse of a relatively short period of time from the starting of the conveying of the delivered copying paper by the pair of conveyor rollers 84 and 86. When a copying paper is to be delivered from the paper cassette 58b loaded in the second cassette receiving section 54b, the length of the copying paper may sometimes be shorter than the length of the second paper introducing passage 70b extending from the paper cassette 58b to the pair of conveyor rollers 84 and 86. Hence, it sometimes happens that when the leading edge of the delivered copying paper has arrived at the nipping position of the conveyor rollers 84 and 86, the trailing edge of the copying paper has already departed from the paper cassette 58b.

In conventional copying apparatuses, the starting of delivery of a copying paper in the next copying cycle is controlled on the basis of the longest copying paper in order to meet the requirements (a) and (b) described above. Specifically, the delivery of a copying paper in the next copying cycle is started after a period of time required for the trailing edge of the longest copying paper to depart from the paper cassette or a longer period of time after the initiation of rotation of the pair of conveyor rollers 84 and 86 and therefore the initiation of conveying of the previous copying paper. Such a conventional copying apparatus suffers from the inconvenience that if the copying paper to be delivered is relatively short, the starting of delivery of the copying paper in the next copying cycle becomes undesirably slow. It is important that the leading edge of the copying paper in the next copying cycle should reach the nip position of the pair of conveyor rollers 84 and 86 before the support frames 132 (and 130) of the optical unit 116, which have moved to the right in Figure 3 and then to the left in Figure 3 in the previous copying cycle and thus have returned to their initial positions, again begin to move to the right in Figure 3 for the next cycle of copying and have advanced over the predetermined distance ℓ₃. Otherwise, it would be impossible to perform the scanning exposure of the document and the conveyance of the copying paper in synchronism. In contrast, when the copying paper is relatively short, the reciprocating distance of the support frame 132 of the optical unit 116 in the previous copying cycle is relatively short, and therefore, the support frame 132 returns to its initial position relatively early. Hence, when the reciprocal movement of the support frame 132 is started for the next copying cycle simultaneously with or immediately after the returning of the support frame 132 to its initial position, the copying paper delivered in the next copying cycle does not reach the nip position of the pair of conveying rollers 84 and 86 before the support frame 132 moves the predetermined distance ℓ₃.

In the illustrated embodiment, the departing of the copying paper from the paper cassette 58a or 58b is detected by utilizing the detecting means 210a and 210b for detecting the stopping of the rotation of the shafts 62a and 62b having the supply rollers 64a and 64b fixed thereto and the delivery counter 358 associated with the detecting means 210a and 210b. If desired, instead of this, the departing of the copying paper from the paper cassette 58a or 58b can be detected by providing a suitable paper detecting means capable of detecting a copying paper immediately below the paper cassette 58a or 58b and detecting the passing of the trailing edge of the copying paper past the detecting position of such detecting means.

### Controlling on the basis of the temperature of the surface or its vicinity of the photosensitive member

In the electrostatic copying apparatus shown the electrical heating means 273 for heating the photosensitive member 20 as described hereinabove is provided. The electrical heating means 273 is constructed of, for example, a heater. The electrical heating means 273 is disposed beneath the transfer corona discharge device 42 within the housing 4 (Figure 3). Preferably, the electrical heating means 273 is disposed in proximity to the photosensitive member 20. It can be provided at a suitable position inwardly or outwardly of the rotating drum 18.

In the electrostatic copying apparatus, a control system shown in Figure 6 is provided in relation to the electrical heating means 273. The control system includes a detecting device 283 including the temperature detecting means 279 for detecting the temperature of the surface or its vicinity of the photosensitive member 20 and a heating control means 500 included in the processing means 306. The temperature detecting means 279 can be constructed of a detecting means for example a thermistor whose resistance value decreases with a rise in the detected temperature. The output voltage of the detecting device 283 is increased in proportion to the detected temperature of the temperature detecting means 279. In the illustrated embodiment, this detecting device 283 is provided in proximity to the photosensitive member 20 downstream of the peeling corona discharge device 46 as viewed in the rotating direction of the rotating drum 18 shown by the arrow 22. The heating control means 500 comprises a comparator 502. In this control system, the output voltage from the detecting device 283 based on the temperature detected by the temperature detecting means 279 is fed to a non-inverted input of the comparator 502 of the heating control means 500. A reference voltage V₁ is applied to a inverted input of the comparator 502. The reference voltage V₁ is set at a voltage equal to the output voltage from the detecting device 283 at a predetermined temperature (35°C in the illustrated embodiment) at which dew formation on the surface of the photosensitive member 20 can be prevented and the charging voltage of the photosensitive member 20 can be maintained at a right value. The output signal from the comparator 502 is fed into a normally closed switch means 506 disposed in a heating control circuit 504, and the switch means 506 is opened or closed by this output signal. In the heating control circuit 504, the electrical heating means 273 is connected to a suitable power supply E such as a commercial AC power supply through the switch means 506. Hence, when the switch means 506 is closed, the electrical heating means 273 is energized, and when the switch means 506 is opened, the electrical heating means 273 is deenergized.

The output voltage of the detecting device 283 which is based on the temperature detected by the temperature detecting means 279 is also fed into a charging control means 508 included in the processing means 306. The output signal from the charging control means 508 is fed into a high voltage source 510 such as a high voltage transformer, and on the basis of this output, the output voltage of the high voltage source 510 is controlled. The charging control means 508 controls the output voltage of the high voltage source 510 on the basis of the output voltage of the detecting device 283, and acts to increase and decrease the output voltage of the high voltage source 510 substantially in proportion to the rising and falling of the output voltage of the detecting device 279, or in other words, to the rising and falling of the temperature detected by the detecting device 279. The output signal of the high voltage source 510 is fed into the charging corona discharge device 38.

With reference to Figure 6, the operation and effect of the electrostatic copying apparatus equipped with the control system described above will be described.

When the temperature of the surface or its vicinity of the photosensitive member 20 is below a relatively low predetermined value (35°C in the illustrated embodiment), the output voltage from the detecting device 283 is lower than, or equal to, the reference voltage V₁, and the output signal of the comparator 502 becomes zero. Hence, the switch means 506 is closed, and the electrical heating means 273 is energized to thereby heat the photosensitive member 20. When the photosensitive member 20 is heated and the temperature of its surface or its vicinity rises, the charging control means 508 controls the output voltage of the high voltage source 510 on the basis of the output voltage from the detecting device 283, and increases the output voltage of the high voltage source 510 in proportion to the rise of the above temperature.

On the other hand, when the photosensitive member 20 is heated by the electrical heating means 273 and the temperature of the surface or its vicinity of the photosensitive member 20 exceeds a predetermined value (35°C in the illustrated embodiment), the output voltage from the detecting device 283 becomes larger than the reference voltage V₁, and the output signal of a predetermined voltage from the comparator 502 is fed into the switch means 506. As a result, the switch means 506 operates and becomes open, whereby the electrical heating means 273 is deenergized, and the heating of the photosensitive member 20 is stopped. When the heating of the photosensitive member 20 is stopped and the temperature of the surface or its vicinity of the photosensitive member 20 drops, the charging control means 508 controls the output voltage of the high voltage source 510 on the basis of the output voltage from the detecting device 283, and the output voltage of the high voltage source 510 is decreased in proportion to the dropping of the temperature.

As stated hereinabove, in the electrostatic copying apparatus equipped with the aforesaid control system, the temperature of the surface or its vicinity of the photosensitive member 20 is maintained approximately at a predetermined value (35°C in the illustrated embodiment) by the energization or deenergization of the electrical heating means 273. It is possible therefore to prevent dew formation on the surface of the photosensitive member 20 and to obtain a copied image of good quality.

Furthermore, since the voltage applied to the charging corona discharge device 38 by the action of the charging control means 508 is increased and decreased in propotion to the rise and fall of the temperature of the surface or its vicinity of the photosensitive member 20, the charge potential applied to the surface of the photosensitive member 20 by the charging corona discharge device 38 can be controlled to a right value depending upon the aforesaid temperature, and a copied image of good quality can therefore be obtained.

### Control of heating the heat fixing device

In the electrostatic copying apparatus improved in accordance with this invention, a control system illustrated in Figure 7 is provided in relation to the heat fixing device 104 (Figure 3). The control system further includes a power saving means 512 and a heating control means (not shown) included in the processing means 306, in addition to the power switch 282 and the detecting device 281 including the temperature detecting means 277 for detecting the temperature of the heat fixing device 104. The temperature detecting means 277 is provided in contact with, or in proximity to, the surface of the heating roller 108 (Figure 3) in the heat fixing device 104, and detects the temperature of the surface or its vicinity of the heating roller 108. Such a temperature detecting means 277 can be constructed of, for example, a thermistor. The power saving means 512 comprises a power saving switch 514 disposed on the panel 280, and produces a power saving signal when manually closed. The heating control means of the processing means 306 includes a memory 516 and a first heater counter 518. A first predetermined value T₁, a second predetermined value T₂ and a third predetermined value T₃ are stored in the memory 516. The first predetermined value T₁ is set at a temperature (about 180°C in the illustrated embodiment) which is suitable for heat fixing the toner image on the copying paper by the heat fixing device 104. The second predetermined value T₂ is set at a suitable temperature (190°C in the illustrated embodiment) which is higher than the first predetermined temperature value T₁(T₁<T₂). The third perdetermined value T₃ is set at a suitable temperature (160°C in the illustrated embodiment) which is higher than the softening temperature of the toner but is lower than the first predetermined value T₁ (T₃<T₁). The first heater counter 518 is comprised of a backup-type counter, and begins counting up when the power switch 282 is closed, and begins counting down when the power switch 282 is opened. A detailed description of the detecting device 281 is omitted here since it is given hereinafter.

In the above control system, the output signals of the power switch 282 and the detecting device 281 including the temperature detecting means 277 and the power saving signal of the power saving switch 514 are fed into the heating control means of the processing means 306. The output signal from the heating control means is fed into the switch means 520 and causes the opening and closing of the switch means 520. When the switch means 520 is closed, the electrical heating means 106 of the heat fixing device 104 is connected to a suitable power supply E such as a commercial AC power supply and energized. When the switch means 520 is opened, the aforesaid connection is released to deenergize the electrical heating means 106.

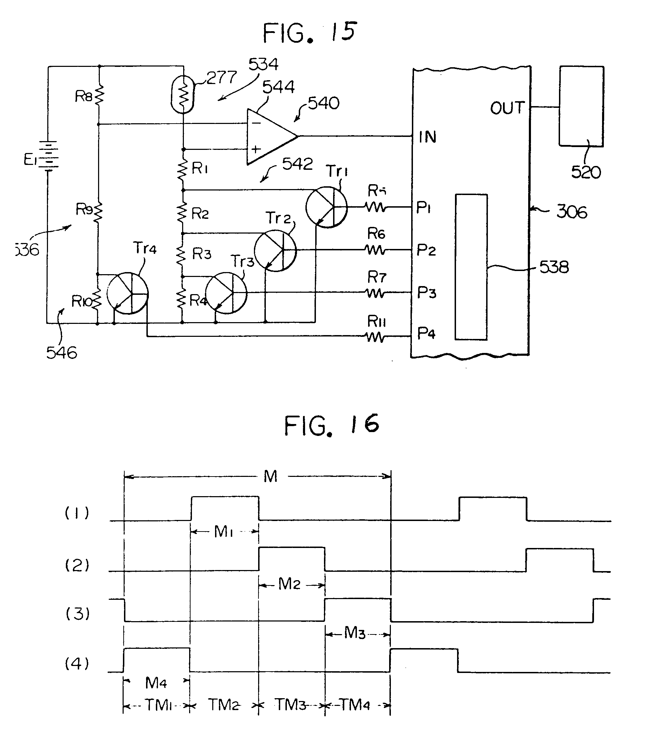

The operation and effect of the heat fixing device 104 including the aforesaid control system will be described with reference to Figure 8 showing a flow chart of the method of control by the control system described above and Figure 15 which shows changes with time of the temperature of the surface or its vicinity of the heating roller 108. When the power switch 282 on the panel 280 is closed in step n5-1, step n5-2 sets in. In step n5-2, it is judged whether the temperature detecting means 277 is out of order (for example, when the temperature detecting means 277 is constructed of a thermistor, whether the thermistor has breaks). When the power switch 282 is closed, the electrical heating means 106 is energized to heat the heat fixing device 104 and at the same time the waiting flag 308 included in the processing means 306 is set at logic "1", whereby the waiting display lamp 296 (Figure 6) is energized to indicate that the heat fixing device 104 is in a preparatory condition. The waiting flag 308 is reset at logic "0" once the temperature of the heat fixing device 104 detected by the temperature detecting means 277 has exceeded the second predetermined value T₂ as a result of heating by the electrical heating means 106. Hence, the waiting display lamp 296 is deenergized. The waiting flag 308 is set when the power saving switch 514 is closed or the power switch 282 is opened. Moreover, when the power saving switch 514 is opened and the temperature detected by the temperature detecting means 277 has exceeded the first predetermined value T₁, the waiting flag 308 is reset.

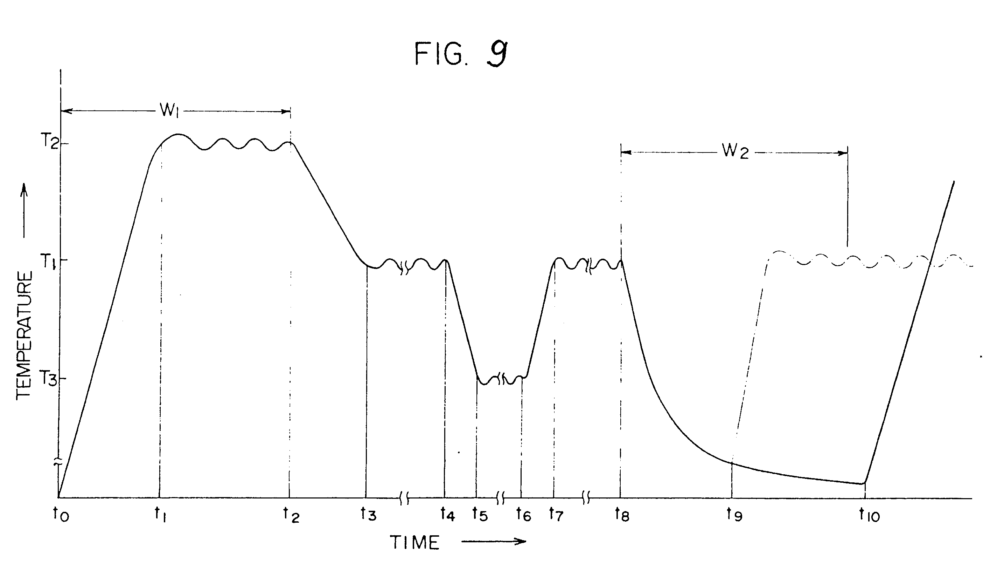

When in step n5-2 it is judged that the temperature detecting means 277 is out of order, step n5-3 sets in, and the service man call lamp 298 on the panel 280 is turned on, thus showing that some trouble has occurred in the copying apparatus. On the other hand, when it is judged in step n5-2 that the temperature detecting means 277 is not out of order, step n5-4 sets in, and the second predetermined value T₂ (about 190°C) stored in the memory 516 in the heating control means is read out, and set [When the predetermined value T₂ has been set, the electrical heating means 106 is controlled based on the signal from the detecting device 281 such that the temperature of the surface or its vicinity of the heating roller 108 is adjusted substantially to the second predetermined value T₂ (about 190°C)]. Then, step n5-5 sets in, and counting up of the counter 518 of the heat control means is started. Furthermore, step n5-6 sets in, and it is judged in this step whether the counter 518 has counted a predetermined number. The predetermined number is the number of counts corresponding to a first predetermined time W₁ from time t₀ to time t₂ in Figure 9. Hence, when the counter 518 has counted the predetermined number, the first predetermined time W₁ elapses. This first predetermined time W₁ is, for example, 10 to 15 minutes. When in step n5-6 it is judged that the counter 518 has not counted the predetermined number, step n5-2 again sets in. When during the counting of the counter 518, the heat fixing device 104 is heated to cause the temperature of the surface or its vicinity of the heating roller 108 to exceed the second predetermined value T₂, the waiting flag 308 is reset at logic "0" on the basis of the signal from the temperature detecting means 277. As a result, the waiting display lamp 296 is deenergized to show that the copying process is in condition for performance. Although at this time the ambient temperature of the heat fixing device 104 is slightly lower than that in an optimal condition, the temperature of the surface or its vicinity of the heating roller 108 after the deenergization of the waiting display lamp 296 becomes the second predetermined value T₂ which is higher than the first predetermined value T₁. Hence, the toner image can be fixed satisfactorily.

On the other hand when in step n5-6 it is judged that the counter 518 has counted the predetermined number, step n5-7 sets in, and the first predetermined value T₁ (about 180°C) stored in the memory 516 of the heating control menas is read out. Thus, instead of the second predetermined value T₂, the first predetermined value T₁ is set [when the predetermined value T₁ has been set, the electrical heating means 106 is controlled on the basis of the signal from the detecting device 281 such that the temperature of the surface or its vicinity of the heating roller 108 is adjusted substantially to the first predetermined value T₁ (about 180°C)]. At this time, the counter 518 keeps maintaining the aforesaid predetermined count number. Thus, the electrical heating means 106 is controlled such that the temperature of the surface or its vicinity of the heating roller 108 is adjusted substantially to the first predetermined value T₁. After the time t₃, this temperature is maintained substantially at the first predetermined value T₁, and the temperature of the ambient atmosphere is maintained at an optimal value.

Accordingly, when the power switch 282 is closed to apply power, the temperature of the surface or its vicinity of the heating roller 108 is maintained substantially at the second predetermined value T₂ higher than the first predetermined value T₁ even during the time from t₁ to t₂, and thereafter is maintained substantially at the first predetermined value T₁ after the time t₃. Thus, it is maintained at a temperature optimal for the heat fixing of the toner image.

When the first predetermined value T₁ is set in step n5-7, step n5-8 sets in. In step n5-8, it is judged whether the power saving switch 514 is closed. When it is judged in step n5-8 that the power saving switch 514 is not closed, step n5-9 sets in. In step n5-9, it is judged whether the power switch 282 is closed. When it is judged in step n5-9 that the power switch 282 is closed, step n5-13 sets in, and it is judged in this step whether the counter 518 is zero. When it is judged in step n5-13 that the counter 518 is not zero, step n5-7 again sets in. Hence, after the time t₃, the temperature of the surface or its vicinity of the heating roller 108 is maintained substantially at the first predetermined value T₁ unless the power saving switch 514 or the power switch 282 is closed.

On the other hand, when it is judged in step n5-8 that the power saving seitch 514 is closed, step n5-10 sets in, and the third predetermined value T₃ (about 160°C) stored in the memory 516 in the heating control means is read out. As a result, the third predetermined value T₃ is set instead of the first predetermined value T₁ [when the predetermined value T₃ has been set, the electrical heating means 106 is controlled on the basis of the signal from the detecting device 281 such that the temperature of the surface of its vicinity of the heating roller 108 is adjusted substantially to the third predetermined value T₃ (about 160°C)]. When the third predetermined value T₃ has been set in step n5-10, step n5-11 follows. In step n5-11, it is judged whether the power saving switch 514 is opened. When it is judged in step n5-11 that the power saving switch 514 is not opened, the step n5-10 again sets in. Hence, when the power saving switch 514 is closed after the time t₄, the electrical heating means 106 is controlled such that the temperature of the surface or its vicinity of the heating roller 108 is adjusted substantially to the third predetermined value T₃. After the time t₅, this temperature is maintained substantially at the third predetermined value T₃. When the power saving switch 514 is closed, the waiting flag 308 is reset at logic "0" to energize the waiting display lamp 296 (Figure 6), thus showing that the heat fixing device 104 is in a preparatory condition.

On the other hand, when it is judged in step n5-11 that the power saving switch 514 is opened, step n5-7 again sets in. In step n5-7, the first predetermined value T₁ stored in the memory 516 is read out, and the first predetermined value T₁ is set instead of the third predetermined value T₃ (when the predetermined value T₁ is set, the electrical heating means 106 is controlled such that the temperature of the surface or its vicinity of the heating roller 108 is adjusted substantially to the first predetermined value T₁). Thus, when the power saving switch 514 is closed, and thereafter opened at time t₆, the electrical heating means 106 is controlled such that the temperature of the surface or its vicinity of the heating roller 108 is adjusted substantially to the first predetermined value. After the time t₇, this temperature is maintained substantially at the first predetermined value T₁. When the power saving switch 514 is opened, and by the heating of the electrical heating means 106, the temperature of the heat fixing device 104 detected by the temperature detecting means 277 exceeds the first predetermined value T₁, the waiting flag 308 is reset at logic "0" to deenergize the waiting display lamp 296, thus showing that the copying process is in a preparatory condition.

When in step n5-9 it is judged that the power switch 282 is not closed, step n5-12 sets in, and the counting down of the counter 518 is started. The count down of the counter 518 is one from the predetermined number maintained in step n5-5. When the counting down of the counter 518 is performed, step n5-9 again sets in. Hence, when the power switch 282 is opened at time t₈, the counting down of the counter 518 is effected, and the copying apparatus is cut off from the power supply to deenergize the electrical heating means 106. Since the power supply is turned off upon the opening of the power switch 282, the waiting flag 308 is reset at logic "0" and thus the waiting display lamp 296 is also deenergized. If it is judged in step n5-9 that the power switch 282 is closed before the number held by the counter 518 becomes zero by the counting down of the counter 518 from the predetermined number in step n5-12 (that is to say, beofre the lapse of a second predetermined time W₂ to be described after the opening of the power switch 282) , step n5-13 sets in. In step n5-13, it is judged whether the counted value of the counter 518 is zero. Thereafter, step n5-7 again sets in, and the first predetermined value T₁ is set in the heating control means. In this case, the counting up of the counter 518 is also started although it is not shown in the flow chart. The counting up can be carried out from the count down number kept in the counter 518 to the predetermined number. Hence, when at time t₉ after the opening of the power switch 282 but before the lapse of the second predetermined time W₂, the power switch 282 is again closed to turn on the power supply, the electrical heating means 106 is controlled such that the temperature of the surface or its vicinity of the heating roller 108 is adjusted substantially to the first predetermined value T₁. The second predetermined time W₂ is the time required for the counter 518 to count down from the predetermined number to zero, and is, for example, 10 to 15 minutes. When the power switch 282 is closed, the waiting flag 308 is set at logic "1" to energize the waiting display lamp 296. When the heating by the electrical heating means 106 causes the temperature detected by the temperature detecting means 277 to exceed the first predetermined value T₁, the waiting flag 308 is reset to logic "0" to deenergize the waiting display lamp 296. On the other hand, when it is judged in step n5-9 that the power switch 282 is closed, after the counter 518 has performed counting down and the number kept by the counter 518 has become zero in step n5-12 (in other words, after the second predetermined time W₂ has elapsed after the opening of the power switch 282), step n5-13 sets in. In step n5-13, it is judged whether the counter 518 is zero, and thereafter step n5-2 agains sets in. Accordingly, when at time t₁₀ which is after the opening of the power switch 282 and further elapsing of the second predetermined period of time W₂, the power switch 282 is again closed to turn on the power supply, the electrical heating means 106 is controlled such that the temperature of the surface or its vicinity of the heating roller 108 is adjusted substantially to the second predetermined value T₂ which is higher than the first predetermined value T₁. A detailed description of the controlling of the electrical heating means 106 on the basis of the signal from the detecting device 281 including the temperature detecting means 277 is omitted here since it is given hereinafter.

In the illustrated embodiment, the first predetermined time W₁ and the second predetermined time W₂ are measured by one backup-type counter 518. If desired, two such counters may be used so that one of them is used to measure the first predetermined time W₁, and the other to measure the second predetermined time W₂.

As stated hereinabove, in the heat fixing device 104 equpped with the control system described above, the temperature of the surface or its vicinity of the heating roller 108 is usually kept substantially at the second predetermined value T₂ higher than the first predetermined value T₁ suitable for heat fixing after the power supply has been turned on, and thereafter it is maintained substantially at the first predetermined value T₁. It is possible therefore to bring the temperature of the surface or its vicinity of the heating roller 108 and the ambient temperature to a temperature suitable for heat fixing within a short period of time, and the waiting time after the application of power can be shortened.

Furthermore, since the temperature of the surface or its vicinity of the heating roller 108 is maintained substantially at the third predetermined value T₃ lower than the first predetermined value T₁ suitable for heat fixing by the operation of the power saving means 512, power consumption can be reduced by utilizing the power saving means when there is a considerable time interval between copying cycles.

Furthermore, when the power supply is again turned on before the lapse of the second predetermined period of time W₂ after the turning off of the power supply (the opening of the power switch 282), the temperature of the surface or its vicinity of the heating roller 108 is maintained substantially at the first predetermined value T₁. Accordingly, the aforesaid temperature and the ambient temperature can be brought to a value suitable for heat fixation within short period of time.

### Control of power distribution

In the electrostatic copying apparatus imporved in accordance with this invention, a control system shown in Figure 7 is further provided in relation to the heat fixing device 104, the document illuminating lamp 118 and a drive motor 522 constituting a main electric motor (which is a drive source for the copying apparatus and drives the optical device 116, the rotating drum 18, the copying paper conveying means 50, etc.). Again with reference to Figure 7, this control system comprises a power control means (not shown) included in the processing means 306. The power control means includes a memory 524, a decade counter 526 and a second heat counter 528. Predetermined values "4", "6" and "9" are stored in the memory 524. These predetermined values "4", "6" and "9" are used to control the amount of an electric current supplied to the electrical heating means, as will be described in detail hereinafter.

In the aforesaid control system, the output signal from the power control means of the processing means 306 is supplied to the switch means 520 (the switch 520 is opened and closed by the output signal from the heating control means as described hereinabove), and the switch means 520 is opened and closed by this output signal. The output signal from the processing means 306 is supplied to the switch means 530 and 532 to open or close the switch means 530 and 532. The switch means 530 serves to control the document illuminating lamp 118. When the 530 is closed, the document illuminating lamp is connected to a suitable power supply E such as a commercial AC power supply and thus energized. Furthermore, upon the opening of the switch means 530, the aforesaid connection is released and the document illuminating lamp 118 is deenergized. On the other hand, the switch means 532 serves to control the drive motor 522. When the switch means 532 is closed, the drive motor 522 is connected to the aforesaid power supply E, and when the switch means 532 is open, the aforesaid connection is released, and the drive motor 522 is deenergized. It will be easily appreciated from the foregoing description that an electric power from a power supply E such as a commercial AC power source which is a single power supply source is supplied to the electrical heating means 106, the document illuminating lamp 118 and the drive motor 522. The processing means 306 is also connected to the power supply E.

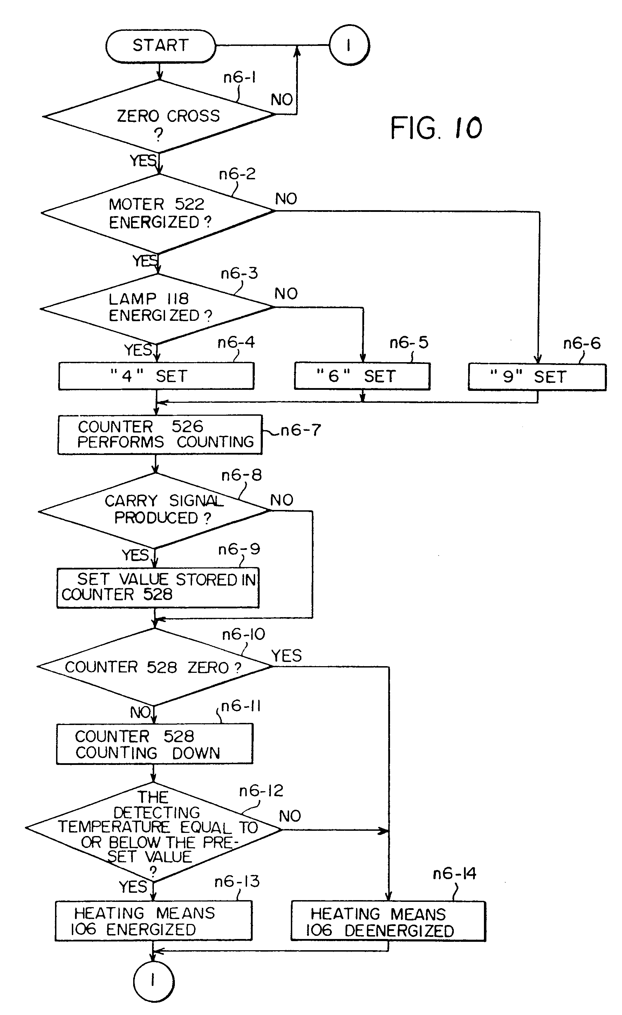

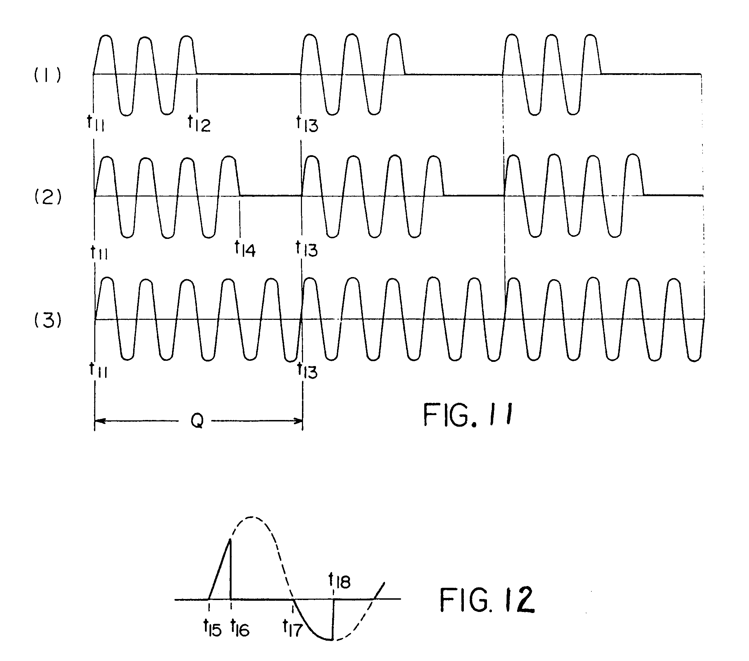

The operation and effect of the electrostatic copying apparatus equipped with the aforesaid control means will be described with reference to Figure 10 showing the flow chart of the method of controlling according to the control system described above and Figure 11. In the following description, a commercial AC power supply is used as the power supply E. When the power supply is turned on, it is first judged in step n6-1 whether the voltage of the power supply E is zero cross. When it is judged that it is not zero cross, the original state is revived. On the other hand, when it is judged that the voltage is zero cross, step n6-2 sets in. In step n6-2, it is judged whether the drive motor 522 is energized (therefore, whether the switch 532 is closed). When it is judged in step n6-2 that the drive motor 522 is energized, the next step n6-3 sets in, and in this stop, it is judged whether the document illuminating lamp 118 is energized (therefore, whether the switch 530 is closed). When in step n6-3 it is judged that the document illuminating lamp 118 is energized, step n6-4 sets in. In step n6-4, the predetermined value "4" stored in the memory 524 in the power control means is read out and set. On the other hand, when it is judged in step n6-3 that the document illuminating lamp is not energized, step n6-5 sets in. In step n6-5, the predetermined value "6" stored in the memory 524 in the power control means is read out and set. Furthermore, when it is judged in step n6-2 that the drive motor 522 is not energized, step n6-6 sets in. In step n6-6, the predetermined value "9" stored in the memory 524 in the power control means is read out and set. Accordingly, when the drive motor 522 and the document illuminating lamp 118 are not energized, the predetermined value "9" is set, and when the drive motor 522 is energized, the predetermined value "6" is set. Furthermore, when the drive motor 522 and the document illuminating lamp 118 are energized, the predetermined value "4" is set.

After the predetermined value has been set in step n6-4, n6-5 or n6-6, step n6-7 sets in and the counting of the decade counter 526 is started. The decade counter 526 counts up from 0 to 9 for each half cycle of the power supply E. When the counting of the decade counter 526 begins, step n6-8 then sets in, and it is judged in this step whether the decade counter 526 has counted up to 9 and produced a carry signal. When it is judged in step n6-8 that the carry signal has been produced, step n6-9 sets in. In step n6-9, the aforesaid predetermined value is transferred to the second heater counter 528 and store. More specifically, when the predetermined value "4" is set in step n6-4, this predetermined value "4" is stored in the heater counter 528. When the predetermined value "6" is set in step n6-5, the predetermined value "6" is stored in the heater counter 528. When the predetermined value "9" is set in step n6-6, this predetermined value "9" is stored in the heater counter 528. Thereafter, step n6-10 sets in, and it is judged in this step whether the value of the heater counter 528 is zero. The heater counter 528 counts down one by one from the aforesaid stored value for each half cycle of the power supply E. When it is judged in step n6-8 that the carry signal is not produced, step n6-8 is followed by step n6-10. When it is judged in step n6-10 that the heater counter 528 is not zero, step n6-11 sets in and the heater counter 528 counts down by one. Then, step n6-12 sets in, and it is judged in this step whether the detected temperature of the heat fixing device 104 (therefore, the temperature of the surface or its vicinity of the heating roller 108 which is detected by the temperature detecting means 277) is equal to, or below, the prescribed value. [In more detail, when the first predetermined value (about 180 °C) is set in the heating control means, it is judged whether the detected temperature is equal to, or below, the first predetermined value; when the second predetermined value (about 190 °C) is set, it is judged whether the detected temperature is equal to or below the second predetermined value; and when the third predetermined value (about 160 °C) is set, it is judged whether the detected temperature is equal to or lower than the third predetermined value.] When it is judged in step n6-12 that the detected temperature is equal to or lower than the preset value, step n6-13 sets in and the electrical heating means 106 is energized (the switch means 520 is closed by the signals from tie power control mean and the heating control means). Thereafter, the process returns to step n6-11. On the other hand, when it is judged in step n6-12 that the detected temperature is not equal to, or below, the preset value, step n6-14 sets in, and the electrical heating means 106 is deenergized (the switch means 520 is opened by the signals from the heating control means irrespective of the signal from the power control means) . Thereafter, the process returns to step n6-1. When the aforesaid step is performed, and it is judged in step n6-10 that the counted number of the heater counter 528 is zero, step n6-14 sets in, and the electrical heating means 106 is deenergized (the switch means 520 is opened by the signal from the power control means irrespective of the signal from the heating control means). Thereafter, step n6-1 again sets in. Thereafter, the aforesaid operation is repeated until the power supply of the copying apparatus is turned off. It will be readily appreciated that in the above control system, the above operation is repeated for each half cycle of the alternate current from the power supply E.

In the above-described flow chart, the operations performed when the predetermined value "4" is set in step n6-4 (therefore when the drive motor 522 and the document illuminating lamp 118 are energized), when the predetermined value "6" is set in the step n6-5 (therefore, when the motor 522 is energized), and when the predetermined value "9" is set in step n6-6 (therefore, when the drive motor 522 and the document illuminating lamp 118 are not energized) are briefly as follows:

In the case of the predetermined value "4" being set, the predetermined value "4" is stored in the heater counter 528 when the decade counter 526 has produced a carry signal (namely, when the decade counter 526 has counted up one by one and reached 9). After the decade counter 526 has produced a carry signal, it again returns to 0, and counts up one by one from 0. After the predetermined value "4" has been stored, the heater counter 528 counts down one by one from the predetermined value "4" for each half cycle of the AC current of the power supply E. Until it is counted down to zero, the switch means 520 is closed by the signal from the power control means, and the current from the power supply E is fed into the electrical heating means 106. After the counted value has reached zero, the switch means 520 is opened by the signal from the power control means and the supply of the current is stopped. In such a case, therefore, the current supplied to the electrical heating means is as shown by (1) in Figure 12, and after storage in the heater counter 528, an alternate current of five half cycles is supplied to the electrical heating means 106, and during the period from the time t₁₁ to t₁₂, the electrical heating means 106 is energized. When the decade counter 526 counts up one by one for each half cycle of the power supply E and again produces a carry signal, the aforesaid operation is repeated. It will be readily appreciated from the foregoing statement that by the carry signal of the decade counter 526, ten half cycles of the power supply E form one cycle Q (for example, from the time t₁₁ to the time t₁₃). When the predetermined value "4" is set, the amount of current per predetermined period supplied to the electrical heating means 106 becomes one-half of the amount of current per predetermined period from the power supply E by the action of the power control means. When the aforesaid detected temperature is higher than the preset value, the switch means 520 is opened by the signal from the heating control means. Accordingly, even when the counted value of the heater counter 528 is not zero, the electrical heating means 106 is not energized.

When the predetermined value "6" is set, the predetermined value "6" is stored in the heater counter 528 when the decade counter 526 has produced a carry signal. After the predetermined value "6" has been stored, the heater counter 528 counts down one by one from the predetermined value "6" for each half cycle of the alternate current of the power supply E. Until the counted value becomes zero as a result of counting down, the switch means 520 is closed by the signal from the power control means, and the current from the power supply E is supplied to the electrical heating means 106. After the counted value has become zero, the switch means 520 is opened by the signal from the power control means, and the supply of the current is stopped. Accordingly, in this case, the current supplied to the electrical heating means 106 is as shown by (2) in Figure 11, and after storage in the heater counter 528, an alternate current of seven half cycles is supplied to the electrical heating means 106, and thus, the electrical heating means 106 is energized during the period from the time t₁₁ to the time t₁₄. When the decade counter 526 counts up one by one for every half cycle of the power supply E and again produces a carry signal, the aforesaid operation is repeated. Thus, when the predetermined value "6" is set, the amount of current per predetermined period supplied to the electrical heating means 106 becomes 7/10 of the amount of current per predetermined period from the power supply E by the action of the power control means. In this case, too, when the detected temperature is the above the predetermined value, the switch means 520 is opened by the signal from the heating control means. Hence, even when the counted number of the heater counter is not zero, the electrical heating means 106 is not energized.

Furthermore, when the predetermined value "9" is set, the predetermined value "9" is stored in the heater counter 528 when the decade counter 526 has produced a carry signal. After the predetermined value "9" has been stored, the heater counter 528 counts down one by one from the predetermined value "9" for each half cycle of the alternate current from the power supply E. Until the counted value becomes zero as a result of counting down, the switch means 520 is closed by the signal from the power control means, and the current from the power supply E is supplied to the electrical heating means 106. Since the predetermined value is "9", the current supplied to the electrical heating means 106 is as shown by (3) in Figure 11, and after storage in the heater counter 528, an alternate current of 10 half cycles is supplied to the electrical heating means, and thus, the electrical heating means 106 is energized during the period from the time t₁₁ to the time t₁₃. When the decade counter 526 counts up one by one for each half cycle of the power supply E and again produces a carry signal, the above operation is repeated. When the predetermined value "9" is set, the amount of current per predetermined period supplied to the electrical heating means 106 becomes substantially equal to the amount of current per predetermined period from the power supply E by the action of the power control means. In this case, too, the switch means 520 is opened by the signal from the heating control means when the detected temperature is above the prescribed value. Hence, the electrical heating means 106 is not energized.

As stated hereinabove, in the electrostatic copying apparatus equpped with the control system described above, when the document illuminating lamp 118 and the drive motor 522 are deenergized, the amount of current per predetermined period supplied to the electrical heating means 106 is greatest, and its power consumption is greatest. When the drive motor 522 is energized, the amount of current per predetermined period is smaller than in the above-described instance, and the power consumption is of a medium degree. When the drive motor 522 and the document illuminating lamp 118 are energized, the amount of current per predetermined period of time is smallest, and the power consumption is smallest. Accordingly, in the aforesaid electrostatic copying apparatus, the power consumption increases as a result of the energization of the drive motor 522 and the document illuminating lamp 118, but the overall increase of the power consumption in the entire copying apparatus can be prevented by reducing the power consumption of the electrical heating means 106. This is effective especially when there is used a power supply having a restricted maximum power consumption, such as a commercial AC power supply. Furthermore, since the maximum power is supplied to the electrical heating means 106 immediately after application of power when the drive motor 522 and the document illuminating lamp 118 are deenergized, the time required until the temperature of the surface or its vicinity of the heating roller 108 reaches a value suitable for the fixation of a toner image (the waiting time) can be shortened.

It will be clear from Figure 11 that in the illustrated embodiment, the amount of current per predetermined period supplied to the electrical heating means 106 is controlled by using a half cycle of the power supply E as one unit. If desired, the amount of current may be controlled as shown in Figure 12. In Figure 12, the alternate current of the power supply is controlled in each half cycle. As regards the AC current shown in Figure 12, that part of the current which corresponds to the period from the time t₁₅ to the time t₁₆ and that part of the current which corresponds to the period from the time t₁₇ to the time t₁₈ are supplied to the electrical heating means 106 as a result of the opening and closing of the switch means 520 by the signal from the power control means. By controlling the current as shown in Figure 12, substantially the same effect as in the case of Figure 11 can be obtained.

In the illustrated embodiment, the power consumption of the electrical heating means is controlled according to the power consumption of the drive motor 522 and the document illuminating lamp 118 which consume a relatively great deal of power. If desired, the power consumed by the electrical heating means 106 can also be controlled according to the power consumption of the electric heating means 237, the electric motor 188 for the semiautomatic document supplying and discharging device, a fan motor (not shown) for cooling the document illuminating lamp, etc. in addition to the above. In this case, the amount of current per predetermined period supplied to the electrical heating means 106 may be decreased stepwise according to the number of electrical means (the drive motor 522, the document illuminating lamp 118, the electric motor 188, the electrical heating means 237, etc.).

### Electrical detecting device

In the electrostatic copying apparatus improved in accordance with this invention, an electrical detecting device shown in Figure 19 is used as the aforesaid detecting device 281 provided in relation to the heat fixing device 104 (Figure 3). With reference to Figure 19, this electrical detecting device includes a first linear-connected circuit portion 534, a second linear-connected circuit portion 536, a switching control means 538 included in the processing means 306, a comparison means 540 and a DC power supply E₁. The first linear-connected circuit portion 534 includes the aforesaid temperature detecting means 277 (constituting an electrical detecting element) such as a thermistor for detecting the temperature of the surface or its vicinity of the heating roller 108, and a variable voltage dividing circuit 542 connected in series to the temperature detecting means 277. The variable voltage dividing circuit 542 has resistance elements R₁, R₂, R₃ and R₄ and transistors Tr₁, Tr₂ and Tr₃ constituting switching means. The resistance elements R₁, R₂, R₃ and R₄ are connected to each other in series. The transistor Tr₁ is connected parallel to a series circuit portion composed of the resistance elements R₂, R₃ and R₄, and the transistor Tr₂ is connected parallel to a series circuit portion composed of the resistance elements R₃ and R₄. The transistor Tr₃ is connected parallel to the resistance element R₄. The bases of these transistors Tr₁, Tr₂ and Tr₃ are connected respectively to output terminals P₁, P₂ and P₃ of the switching control means 538 through resistance elements R₅, R₆ and R₇. The switching control means 538 will be described in detail hereinafter. The second linear-connected circuit portion 536 has resistance elements R₈ and R₉ connected to each other in series. The second linear-connected circuit portion 536 and the aforesaid first linear-connected circuit portion 534 are connected parallel to each other to the DC power supply E₁. The comparison means 540 is constructed of a comparator 544. The non-inverted input terminal of the comparator 544 is connected to a point of connection between the temperature detecting means 277 and the variable voltage dividing circuit 542 in the first linear-connected circuit portion 534, and its inverted input terminal is connected to a point of connection between the resistance elements R₈ and R₉ in the second linear-connected circuit portion 536. On the other hand, the output terminal of the comparator 544 is connected to an input terminal IN of the heating control means included in the processing means 306. Thus, when a first divided voltage at the point of connection between the temperature detecting means 277 and the variable voltage dividing circuit 542 becomes equal to, or below, a second divided voltage (acting as a reference voltage) of the point of connection between the resistance elements R₈ and R₉, a signal of logic "0" is produced in the comparator 544. This logic "0" signal is fed into the above heating control means. When the first divided voltage becomes higher than the second divided voltage, a signal of logic "1" is produced in the comparator 544 and is fed to the heating control means. A signal produced in the heating control means on the basis of the signal from the comparator 544 is fed to the switch means 520, and the switch means 520 is opened or closed on the basis of this signal. As stated above, when the switch means 520 is closed, the electrical heating means 106 is energized. When the switch means 520 is opened, the electrical heating means 106 is deenergized. The switch means 520 is also opened or closed by the power control means as stated hereinabove.

Now, the switching control means 538 will be described. The signals shown in Figure 20 are delivered respectively from the output terminals P₁, P₂ and P₃ of the switching control means 538. A high level signal of a cycle M with a pulse width M₁ shown by (1) in Figure 14 is delivered from the output terminal P₁. From the output terminal P₂, a high level signal of a cycle M with a pulse width M₂ as shown by (2) in Figure 15 is delivered. The high level signal with a pulse width M₂ is delivered according to the falling of the high level signal with a pulse width M₁. Furthermore, a high level signal of a cycle M having a pulse width M₃ shown by (3) in Figure 14 is delivered from the output terminal P₃. The high level signal with a pulse width M₃ is delivered according to the falling of the high level signal with a pulse width M₂. In the illustrated embodiment, the pulse widths M₁, M₂ and M₃ of the high level signals are the same and set at one-fourth of the cycle M. The resistance values of the resistance elements R₁, R₂, R₃ and R₄ of the variable voltage dividing circuit 542 are selected such that in a first timing period TM₁ (when a high level signal is not delivered from the switching control means 538), the first divided voltage does not become lower than the second divided voltage unless the resistance value of the temperature detecting means 277 becomes larger than that at the lowest conceivable temperature (-20 °C in the illustrated embodiment); that in a second timing period TM₂ (when the high level signal with a pulse width M₁ is delivered from the switching control means 538), the first divided voltage does not become lower than the second divided voltage unless the resistance value of the temperature detecting means 277 becomes higher than that at the aforesaid second predetermined value T₂ (about 190 °C); that in a third timing period TM₃ (when the high level signal with a pulse width M₂ is delivered from the switching control means 538), the first divided voltage does not become lower than the second divided voltage unless the resistance value of the temperature detecting means 277 becomes higher than that at the aforesaid first predetermined value T₁ (about 180 °C); and that in a fourth timing period TM₄ (when the high level signal with a pulse width M₃ is delivered from the switching control means 538), the first divided voltage does not become lower than the second divided voltage unless the resistance value of the temperature detecting means 277 becomes higher than that at the aforesaid third predetermined value T₃ (about 160 °C). The second divided voltage can be set at a suitable value by varying the resistance values of the resistance elements R₈ and R₉.

Now, the operation and effect of the detecting device will be described. When no high level signal is delivered from the switching control means 538 (during the first timing period TM₁), the transistors Tr₁, Tr₂ and Tr₃ are held at cut off, and the current from the DC power supply E₁ flows through the temperature detecting means 277 and the resistance elements R₁, R₂, R₃ and R₄. In this case, therefore, the voltage between the two terminals of the series circuit portion composed of the resistance elements R₁, R₂, R₃ and R₄ is the first divided voltage, and in the comparator 544, this first divided voltage is compared with the second divided voltage. When it is found that the first divided voltage is higher than the second divided voltage [in other words, when the detected temperature of the temperature detecting means 277 is higher than the lowest conceivable temperature (-20 °C)], the output signal of the comparator 544 becomes logic "1". When the first divided voltage is equal to, or lower than, the second divided voltage [in other words, when the detected temperature of the temperature detecting means 277 is equal to, or lower than, the lowest conceivable temperature; but since such an instance is not conceivable, when a trouble (such as wire breaks if a thermistor is used) occurs in the temperature detecting means 277], the output signal of the comparator 544 becomes logic "0". It is possible therefore to determine by the output singal from the comparator 544 during the first timing period TM₁ whether the temperature detecting means 277 gets out of order.

When the high level signal with a pulse width M₁ is delivered from the switching control means 538 (during the second timing period TM₂), the transistor Tr₁ conducts, and the current from the DC power source E₁ flows through the temperature detecting means 277, the resistance element R₁ and the transistor Tr₁. Hence, in this case, the voltage between the two terminals of the resistance element R₁ is the first divided voltage, and this first divided voltage is compared with the second divided voltage in the comparator 544. When it is found that the first divided voltage is higher than the second divided voltage [in other words, when the detected temperature of the temperature detecting means 277 is higher than the second predetermined value T₂ (about 190 °C)], the output signal of the comparator 544 becomes logic "1". When the first divided voltage is equal to, or lower than, the second divided voltage [in other words, when the detected temperature of the temperature detecting means 277 is equal to, or lower than, the second predetermined value T₂ (about 190 °C)], the output signal of the comparator 544 becomes logic "0". Thus, it is possible to determine by the output signal from the comparator 544 during the second timing period TM₂ whether the detected temperature of the temperature detecting means 277 is equal to, or lower than, the second predetermined value T₂.

When the high level signal with a pulse width M₂ is delivered from the switching control means 538 (during the third timing period TM₃), the transistor Tr₂ conducts, and the current from the DC power supply E₁ flows through the temperature detecting means 277, the resistance elements R₁ and R₂ and the transistor Tr₂. In this case, therefore, the voltage between the two terminals of the series circuit portion composed of the resistance element R₁ and R₂ is the first divided voltage, and this first divided voltage is compared with the second divided voltage in the comparator 544. When the first divided voltage is found to be higher than the second divided voltage [in other words, when the detected temperature of the temperature detecting means 277 is higher than the aforesaid first predetermined value T₁ (about 180 °C)], the output signal of the comparator 544 becomes logic "1". When the first divided voltage is equal to, or lower than, the second divided voltage [in other words, when the detected temperature of the temperature detecting means 277 is equal to, or lower than, the first predetermined value T₁ (about 180 °C)], the output signal of the comparator 544 becomes logic "0". It is possible therefore to determine by the output signal from the comparator 544 during the third timing period TM₃ whether the detected temperature of the temperature detecting means 277 is equal to, or lower than, the first predetermined value T₁.

When the high level signal with a pulse width M₃ is delivered from the switching control means 538 (during the fourth timing period TM₄), the transistor Tr₃ conducts, and the current from the DC power source E₁ flows through the temperature detecting means 277, the resistance elements R₁, R₂ and R₃ and the transistor Tr₃. In this case, therefore, the voltage between the two terminals of the series circuit portion composed of the resistance elements R₁, R₂ and R₃ is the first divided voltage, and this first divided voltage is compared with the second divided voltage in the comparator 544. When it is found that the first divided voltage is higher than the second divided voltage [in other owrds, when the detected temperature of the temperature detecting means 277 is higher than the aforesaid third predetermined value T₃ (about 160 °C)], the output signal of the comparator 544 becomes logic "1". When the first divided voltage is equal to, or lower than, the second divided voltage [in other words, when the detected temperature of the temperature detecting means 277 is equal to, or lower than, the third predetermined value T₃ (about 160 °C)], the output signal of the comparator 544 becomes logic "0". It is possible therefore to determine by the output signal from the comparator 544 during the fourth timing period TM₄ whether the detected temperature of the temperature detecting means 277 is equal to, or lower than, the third predetermined value T₃.

As stated hereinabove, in the illustrated detecting device, not only a plurality of predetermined temperatures but also a trouble in the temperature detecting means 277 itself can be detected by a single temperature detecting means 277. The detecting device is characterized by the fact that a trouble in the temperature detecting means 277 can be promptly detected.

The output signal of the comparator 544 produced as above is fed to the heating control means of the processing means 306, and the switch means 520 is opened or closed by a signal produced in the heating control means on the basis of the signal fed from the comparator 544. More specifically, when the second predetermined value T₂ (about 190 °C) is set in the heating control means, only the output signal of the comparator 544 produced during the second timing period TM₂ is taken out. When this output signal is logic "0", an actuating signal is produced in the heating control means to close the switch means 520. On the other hand, when this output signal is logic "1", an operation stopping signal is produced in the heating control means to open the switch means 520. It will be readily seen from the foregoing description that when the second predetermined value T₂ is set, the electrical heating means 106 is controlled by the output signal of the comparator 544 produced during the second timing period TM₂, and consequently, the temperature of the surface or its vicinity of the heating roller 108 is adjusted substantially to the second predetermined value T₂.

When the first predetermined value T₁ (about 180 °C) is set in the heating control means, only the output signal of the comparator 544 produced during the third timing period TM₃ is taken out. When this output signal is logic "0", the switch means 520 is closed, and when this output signal is logic "1", the switch means 520 is opened. Accordingly, when the first predetermined value T₁ is set, the elqctrical heating means 106 is controlled by the output signal of the comparator 544 produced during the third timing period TM₃, and consequently the temperature of the surface or its vicinity of the heating roller 108 is adjusted substantially at the first predetermined value T₁.

When the third predetermined value T₃ (about 160 °C) is set in the heating control means, only the output singal of the comparator 544 produced during the fourth timing period TM₄ is taken out. When this output signal is logic "0", the switch means 520 is closed as stated hereinabove. On the other hand, when this output is logic "1", the switch means 520 is opened. Hence, when the third predetermined value T₃ is set, the electrical heating means 106 is controlled by the output signal of the comparator 544 produced during the fourth timing period TM₄, and consequently, the temperature of the surface or its vicinity of the heating roller 108 is adjusted substantially at the third predetermined value T₃.

Figure 15 shows a modified example of the electrical detecting device. In this figure, substantially the same parts as those in the aforesaid embodiment are designated by the same reference numerals. In the embodiment shown in Figure 21, the second linear-connected circuit portion 536 of the electrical detecting device further comprises a parallel circuit 546 connected in series to the resistance elements R₈ and R₉. The parallel circuit 546 has an additional resistance element R₁₀ and a transistor Tr₄ constituting an additional switching means connected parallel to the resistance element R₁₀. The base of the transistor Tr₄ is connected to the output terminal P₄ of the switching control means 538 through a resistance element R₁₁. Otherwise, the structure of the detecting device in the modified example is substantially the same as that of the embodiment described hereinabove.

The signals shown in Figure 16 are delivered from the output terminals P₁, P₂, P₃ and P₄ of the switch control means 538. From the output terminal P₁, a high level signal of a cycle M with a pulse width M₁ as shown by (1) in Figure 16 is delivered. This high level signal with a pulse width M₁ is delivered according to the falling of a high level signal with a pulse width M₄ which will be described hereinafter. Substantially the same high level signals as the aforesaid high level signal, shown by (2) and (3) in Figure 16, are respectively delivered from the output terminals P₂ and P₃. Furthermore, a high level signal of a cycle M with a pulse width M₄ shown by (4) in Figure 16 is delivered from the output terminal P₄. The high level signal with a pulse width M₄ is delivered according to the falling of the high level signal having a pulse width M₃. The resistance value of the resistance element R₁₀ in the parallel circuit 546 is selected such that during the first timing period TM₁ (when the high level signal having a pulse width M₄ is delivered from the switching control means 538), the first divided voltage does not become lower than the second divided voltage unless the resistance value of the temperature detecting means 277 becomes higher than that at the lowest conceivable temperature (-20 °C in the illustrated embodiment).

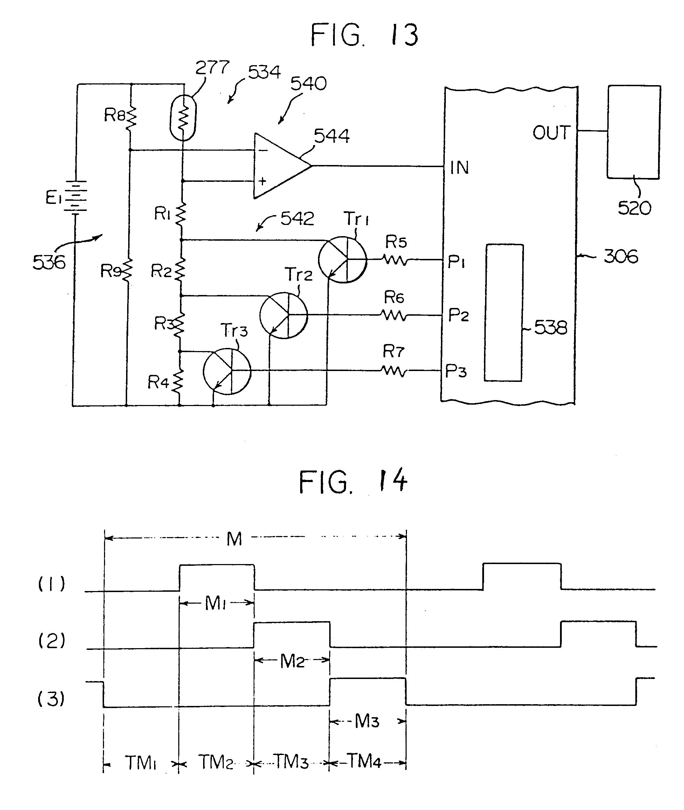

When a high level signal with a pulse width M₄ is delivered from the switching control means 538 in this detecting device (during the first timing period TM₁), the transistor Tr₄ conducts, and the current from the DC power supply E₁ flows through the resistance elements R₈ and R₉ and the transistor Tr₄. In this case, therefore, the voltage between the two terminals of the resistance element R₉ is the second divided voltage, and in the comparator 544, this second divided voltage is compared with the first divided voltage (which, in this case, is the voltage between the two terminals of the seried circuit portion composed of the resistance elements R₁, R₂, R₃ and R₄). On the other hand, when a high level signal with a pulse width M₁, a high level signal with a pulse width M₂, or a high level signal with a pulse width M₃ is delivered from the switching control means 538 (during the second timing period TM₂, the third timing period TM₃ or the fourth timing period TM₄), the transistor Tr₄ is held at cut off, and the current from the DC power supply E₁ flows through the resistance elements R₈, R₉ and R₁₀. In this case, therefore, the voltage between the two terminals of the series circuit portion composed of the resistance elements R₉ and R₁₀ is the second divided voltage, and is compared with the first divided voltage in the comparator 544. Otherwise, the operation and effect of the detecting device in the modified example are nearly the same as those in the embodiment illustrated in Figure 13.

In the detecting device in the modified example described above, the second divided voltage is increased during the first timing period TM₁. It is possible to maintain the resistance value of the resistance element R₄ of the first linear-connected circuit portion 534 at a lower value and the resistance values of the resistance elements R₁, R₂ and R₃ at higher values than in the embodiment described hereinabove. As a result, the currents flowing through the temperature detecting means 277 during the second, third and fourth timing periods TM₂, TM₃ and TM₄ can be reduced, and the amount of heat generated in the temperature detecting means 277 itself can be decreased.

The illustrated embodiments have been described with regard to an example in which the detecting device is applied to the detecting device of a heat fixing station including the temperature detecting means 277. If desired, it is also possible to apply such a detecting device to the detecting device at a photoconductive drum including the temperature detecting means 279. In the latter case, only one temperature value is preset, and therefore, the resistance elements R₂ and R₃ and the transistors Tr₂ and Tr₃ can be omitted.

Furthermore, in the illustrated embodiments, the temperature is detected by using the temperature detecting means 277. If desired, elements other than temperature can be detected by using a detecting element whose resistance value changes with a change in the amount of detection, instead of the temperature detecting means 277.

## Claims

1. A detecting device provided in an electrostatic copying apparatus comprising
- a first linear-connected circuit portion including an electrical detecting element (277) the resistance value of which varies according to changes in an object to be detected and a variable voltage dividing circuit (542) connected in series to said detecting element, said variable voltage dividing circuit having at least two resistance elements (R₁, R₂, R₃, R₄) and at least one switching means (Tr₁, Tr₂, Tr₃) for selectively varying the resistance value of said variable voltage dividing circuit,
- a direct-current power supply (E₁) for applying direct-current power to said first linear-connected circuit portion,
- a switching control means (538) for maintaining said switching means of said variable voltage dividing circuit in conducting state for a predetermined period of time (M₁, M₂, M₃),
- a comparison means (540) for comparing a first divided voltage at a point of connection between said detecting element and said variable voltage dividing circuit in said first linear-connected circuit with a standard voltage,
characterised in
that the resistance values of the resistance elements (R₁, R₂, R₃, R₄) of said variable voltage dividing circuit (542) are selected so that, when said at least one switching means (Tr₁, Tr₂, Tr₃, Tr₄) of said variable voltage dividing circuit is not in conducting state and the total resistance of said variable voltage dividing circuit is at its highest value, said first divided voltage does not fall below, or exceed, said standard voltage, unless the resistance value of said detecting element (277) exceeds the highest conceivable value.

2. A device according to claim 1, characterised in
that a second linear-connected circuit portion (536) having at least two resistance elements (R₈, R₉) connected in series to each other is provided parallel-connected to said first linear-connected circuit portion
and
that said standard voltage is a second divided voltage derived from a connecting point between said at least two resistance elements (R₈, R₉) in said second linear-connected circuit.

3. A device according to claim 2, characterised in
that said second linear-connected circuit portion (536) includes a parallel-connected circuit connected in series to said at least two resistance elements (R₈, R₉) for selectively varying said second divided voltage,
that said parallel-connected circuit includes an additional resistance element (R₁₀) and an additional switching means (Tr₄) connected parallel thereto
and
that said switching control means (538) maintains said additional switching means (Tr₄) in said parallel-connected circuit in continuity when said switching means (Tr₁, Tr₂, Tr₃)in said variable voltage dividing circuit is not in conducting state.

4. A device according to any of the claims 1 to 3, characterised in that said object to be detected is temperature.

5. A detecting device according to claim 4, characterised in
that said detecting element is a thermistor (277) the resistance value of which decreases when the temperature rises.

## Patentansprüche

1. Eine Erfassungseinrichtung, die in einem elektrostatischen Kopiergerät vorgesehen ist, mit
- einem ersten Reihenschaltungsabschnitt, der ein elektrisches Erfassungselement (277), dessen Widerstandswert sich entsprechend den Veränderungen einer zu erfassenden Größe verändert, sowie eine mit dem Erfassungselement in Reihe geschaltete variable Spannungsteilerschaltung (542) enthält, wobei die variable Spannungsteilerschaltung wenigstens zwei Widerstandselemente (R₁, R₂, R₃, R₄) sowie wenigstens eine Schalteinrichtung (Tr₁, Tr₂, Tr₃) enthält, um den Widerstandswert der variablen Spannungsteilerschaltung wahlweise zu verändern,
- einer Gleichstrom-Leistungsversorgung (E₁) für die Eingabe von Gleichstromleistung in den ersten Reihenschaltungsabschnitt,
- einer Schaltsteuereinrichtung (538), um die Schalteinrichtung der variablen Spannungsteilerschaltung während einer vorgegebenen Zeitperiode (M₁, M₂, M₃) im leitenden Zustand zu halten,
- einer Vergleichseinrichtung (540) zum Vergleichen einer ersten geteilten Spannung, die in einem Verbindungspunkt zwischen dem Erfassungselement und der variablen Spannungsteilerschaltung im ersten Reihenschaltungsabschnitt anliegt, mit einer Standardspannung,
dadurch gekennzeichnet,
daß die Widerstandswerte der Widerstandselemente (R₁, R₂, R₃, R₄) der variablen Spannungsteilerschaltung (542) so gewählt sind, daß, wenn die wenigstens eine Schalteinrichtung (Tr₁, Tr₂, Tr₃, Tr₄) der variablen Spannungsteilerschaltung nicht im leitenden Zustand ist und der Gesamtwiderstand der variablen Spannungsteilerschaltung seinen höchsten Wert besitzt, die erste geteilte Spannung nicht unter die Standardspannung abfällt oder diese übersteigt, wenn der Widerstandswert des Erfassungselementes (277) den höchsten denkbaren Wert nicht übersteigt.

2. Eine Einrichtung gemäß Anspruch 1, dadurch gekennzeichnet,
daß in Parallelschaltung zum ersten Reihenschaltungsabschnitt ein zweiter Reihenschaltungsabschnitt (536) vorgesehen ist, der wenigstens zwei miteinander in Reihe geschaltete Widerstandselemente (R₈, R₉) besitzt und
daß die Standardspannung eine zweite geteilte Spannung ist, die am Verbindungspunkt zwischen den wenigstens zwei Widerstandselementen (R₈, R₉) im zweiten Reihenschaltungsabschnitt abgegriffen wird.

3. Eine Einrichtung gemäß Anspruch 2, dadurch gekennzeichnet,
daß der zweite Reihenschaltungsabschnitt (536) eine Parallelschaltung enthält, die mit den wenigstens zwei Widerstandselementen (R₈, R₉) in Reihe geschaltet ist, um die zweite geteilte Spannung wahlweise zu verändern,
daß die Parallelschaltung ein zusätzliches Widerstandselement (R₁₀) sowie eine hierzu parallel geschaltete, zusätzliche Schalteinrichtung (Tr₄) enthält, und
daß die Schaltsteuereinrichtung (538) die zusätzliche Schalteinrichtung (Tr₄) in der Parallelschaltung im leitenden Zustand hält, wenn die Schalteinrichtung (Tr₁, Tr₂, Tr₃) in der variablen Spannungsteilerschaltung nicht im leitenden Zustand ist.

4. Eine Einrichtung gemäß einem der Ansprüche 1 bis 3, dadurch gekennzeichnet, daß die zu erfassende Größe die Temperatur ist.

5. Eine Erfassungseinrichtung gemäß Anspruch 4, dadurch gekennzeichnet, daß das Erfassungselement ein Thermistor ist (277), dessen Widerstandswert bei steigender Temperatur abnimmt.

## Revendications

1. Un dispositif détecteur disposé dans un appareil à copier électrostatique comprenant
- une première portion de circuit connecté en ligne comprenant un élément détecteur électrique (277) dont la valeur de la résistance varie selon les modifications d'un objet à détecter et un circuit électrique diviseur de tension (542) variable connecté en série audit élément détecteur, ledit circuit électrique diviseur de tension variable ayant au moins deux éléments de résistance (R₁, R₂, R₃, R₄) et au moins un moyen commutateur (Tr₁, Tr₂, Tr₃), pour faire varier sélectivement la valeur de la résistance dudit circuit diviseur de tension variable,
- une source d'alimentation en courant continu (E₁) pour appliquer un courant continu à ladite première portion de circuit connecté en ligne,
- un moyen de commande de commutation (538) pour maintenir ledit moyen commutateur dudit circuit électrique diviseur de tension à l'état conducteur pendant une période de temps prédéterminée (M₁, M₂, M₃),
- un moyen comparateur (540) pour comparer à une tension standard une première tension divisée à un point de connexion entre ledit élément détecteur et ledit circuit diviseur de tension variable dans ledit premier circuit connecté en ligne,
caractérisé en ce
que les valeurs de résistance des éléments de résistance (R₁, R₂, R₃, R₄) dudit circuit diviseur de tension variable (542) sont sélectionnées de telle manière que, quand ledit au moins un moyen commutateur (Tr₁, Tr₂, Tr₃, Tr₄) dudit circuit diviseur de tension variable n'est pas à l'état conducteur et la résistance totale dudit circuit diviseur de tension variable est à sa valeur la plus élevée, ladite première tension divisée ne tombe pas en-dessous de, ou ne dépasse pas, ladite tension standard, à moins que la valeur de résistance dudit élément détecteur (277) dépasse la valeur la plus élevée concevable.

2. Un dispositif selon la revendication 1,
caractérisé en ce
qu'une seconde portion de circuit connecté en ligne (536) ayant au moins deux éléments de résistance (R₈, R₉) connectés en série l'un à l'autre est disposée connectée en parallèle à ladite première portion de circuit connectée en ligne
et
que ladite tension standard est une seconde tension divisée dérivée d'un point de connexion entre lesdits au moins deux éléments de résistance (R₈, R₉) dans ledit second circuit connecté en ligne.

3. Un dispositif selon la revendication 2,
caractérisé en ce
que ladite seconde portion de circuit connecté en ligne (536) comprend un circuit connecté en parallèle connecté en série auxdits au moins deux éléments de résistance (R₈, R₉) pour faire varier sélectivement ladite seconde tension divisée,
que ledit circuit connecté en parallèle comprend un élément de résistance additionnel (R₁₀) et un moyen commutateur additionnel (Tr₄) connecté en parallèle à celui-ci
et
que ledit moyen de commande de commutation (538) maintient ledit élément commutateur additionnel (Tr₄) dans ledit circuit connecté en parallèle en continuité quand ledit moyen commutateur (Tr₁, Tr₂, Tr₃) dans ledit circuit diviseur de tension variable n'est pas à l'état conducteur.

4. Un dispositif selon l'une quelconque des revendications 1 à 3,
caractérisé en ce
que ledit objet à détecter est une température.

5. Un dispositif détecteur selon la revendication 4,
caractérisé en ce
que ledit élément détecteur est une thermistance (277) dont la valeur de la résistance diminue lorsque la température augmente.
